(19) Europäisches Patentamt
European Patent Office
Office européen des brevets

(11) **EP 2 092 730 B1**

(12) **EUROPÄISCHE PATENTSCHRIFT**

(45) Veröffentlichungstag und Bekanntmachung des Hinweises auf die Patenterteilung:
**08.05.2013   Patentblatt 2013/19**

(21) Anmeldenummer: **07822815.2**

(22) Anmeldetag: **22.11.2007**

(51) Int Cl.:
***H04N 1/58*** *(2006.01)*

(86) Internationale Anmeldenummer:
**PCT/EP2007/062690**

(87) Internationale Veröffentlichungsnummer:
**WO 2008/062038 (29.05.2008 Gazette 2008/22)**

(54) **VERFAHREN, COMPUTERPROGRAMM UND DRUCKSYSTEM ZUM TRAPPING VON DRUCKDATEN**

METHOD, COMPUTER PROGRAM AND PRINT SYSTEM FOR TRAPPING PRINT DATA

PROCÉDÉ, PROGRAMME INFORMATIQUE ET SYSTÈME D'IMPRESSION POUR INTERCEPTER DES DONNÉES D'IMPRESSION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.11.2006   DE 102006055587**

(43) Veröffentlichungstag der Anmeldung:
**26.08.2009   Patentblatt 2009/35**

(73) Patentinhaber: **OCÉ Printing Systems GmbH
85586 Poing (DE)**

(72) Erfinder:
 • **JÖRGENS, Dieter
  85598 Baldham (DE)**
 • **EILER, Göran
  85586 Poing (DE)**
 • **BÄUMLER, Ulrich
  85586 Poing (DE)**
 • **LA ROSA DUCATO, José
  85435 Erding (DE)**

(74) Vertreter: **Schaumburg, Thoenes, Thurn, Landskron, Eckert
Patentanwälte
Postfach 86 07 48
81634 München (DE)**

(56) Entgegenhaltungen:
EP-A- 0 840 500          WO-A-95/20796
WO-A-2007/096283     US-A1- 2005 012 946
US-A1- 2005 099 642   US-B1- 6 809 839

 • **GLOBAL GRAPHICS SOFTWARE LTD: "TrapPro User Manual"[Online] Januar 2005 (2005-01), XP002474594 Gefunden im Internet: URL:http://www.fusionsystems.com/html/fsi/ docs/ TrapProUsersManual.pdf> [gefunden am 2008-04-01]**

EP 2 092 730 B1

**Beschreibung**

Die Erfindung betrifft ein Verfahren, ein Computerprogramm und ein Drucksystem zum Trapping von Druckdaten.

Die Erfindung steht im Zusammenhang mit anderen Erfindungen, die in den deutschen Patentanmeldungen DE 10 2006 055 587.2, DE 10 2006 055 624.0, DE 10 2006 055 625.9 und DE 10 2006 055 626.7 beschrieben sind.

Farbige Dokumente oder Dokumententeile, wie z.B. Bilder, Farbgrafiken oder ähnliches, werden meist durch Bilddaten beschrieben, die in Farbauszüge gegliedert sind. Diese Art der Datengliederung entspricht wiederum vielen Druckausgabeverfahren bzw. -geräten, die die Bilddaten in Farbauszügen auf einen Aufzeichnungsträger drucken, z.B. in den Farben Gelb (Y), Magenta (M), Cyan (C) und Schwarz (K) oder in Schwarz und einer oder mehreren sogenannten Highlight Color Farben oder den Océ Custom Tone® Farben.

Die Anmelderin entwickelt und vertreibt entsprechende digitale elektrografische Drucksysteme. Sie sind z.B. in der Veröffentlichung "The World of Printers, Technologies of Océ Printing Systems", Dr. Gerd Goldmann (Hsg.), Océ Printing Systems GmbH, Poing, Ed. 7 (2002) beschrieben. Auf Seiten 249-286 sind verschiedene Offset- und Digital-Drucktechnologien beschrieben, auf Seiten 287-325 sind verschiedene digitale Farbdrucksysteme beschrieben und auf Seiten 233-248 sind Grundlagen des Farbdruckens beschrieben. Auf Seiten 209-232 sind Grundlagen digitaler Bildverarbeitung beschrieben. Auf den Seiten 246-248 sind Prinzipien des Highlight Color Printing beschrieben.

Aus der WO 98/39691 A1 ist ein digitales Drucksystem zum beidseitigen monochromen und/oder farbigen Bedrucken eines Aufzeichnungsträgers bekannt. Aus der internationalen Patentanmeldung Nr. PCT/EP2004/00700 (Veröffentlichungsnummer WO 2005/001765 A2) ist ein Verfahren zum Aufbereiten einer Bildpunktdatei bekannt, bei dem aus den Bildpunkten zusammenhängende Gebiete des Bildes ermittelt werden.

Aus der US-A-5,581,667, der EP-A2-484 890, der US 2003/0090689 A1 sowie den US 2006/0033959 A1, US-A-4,931,861, EP-A2-929 189, DE-A1-199 12 511, US 2001/0055130 A1 und der EP-A2-833 216 sind Verfahren zum Trapping von Bilddaten bekannt.

Sowohl beim digitalen Druck als auch beim Offset-Druck gibt es das sogenannte Passer-Problem. Dabei handelt es sich darum, dass bei mehreren Druckvorgängen auf einem Blatt Papier aufgrund mechanischer Toleranzen nicht garantiert werden kann, dass die Positionierung des Papiers bei allen Druckvorgängen immer exakt gleich ist. Das Problem tritt auf bei einfarbigem Druck, wenn Vorder- und Rückseite getrennt bedruckt werden oder bei mehrfarbigem Druck auf einer Seite.

Beim Vorder- und Rückseitendruck stört dieses Problem, wenn z.B. ein Rahmen je um die Vorder- und Rückseiten gedruckt wird und diese Rahmen nicht exakt aufeinander liegen, was man bemerkt, wenn man die Seite gegen das Licht hält.

Beim Mehrfarbendruck sind die Farben relativ zueinander versetzt. Solange sich die unterschiedlichen Farben nicht berühren, fällt dies nicht weiter auf. Berühren sich die Farben, so werden durch den Versatz die Farben an der Berührungslinie übereinander gedruckt, was zu einer Verfälschung des Farbeindrucks führt, oder es bleibt ein weißer Spalt (Blitzer) an der Berührungslinie.

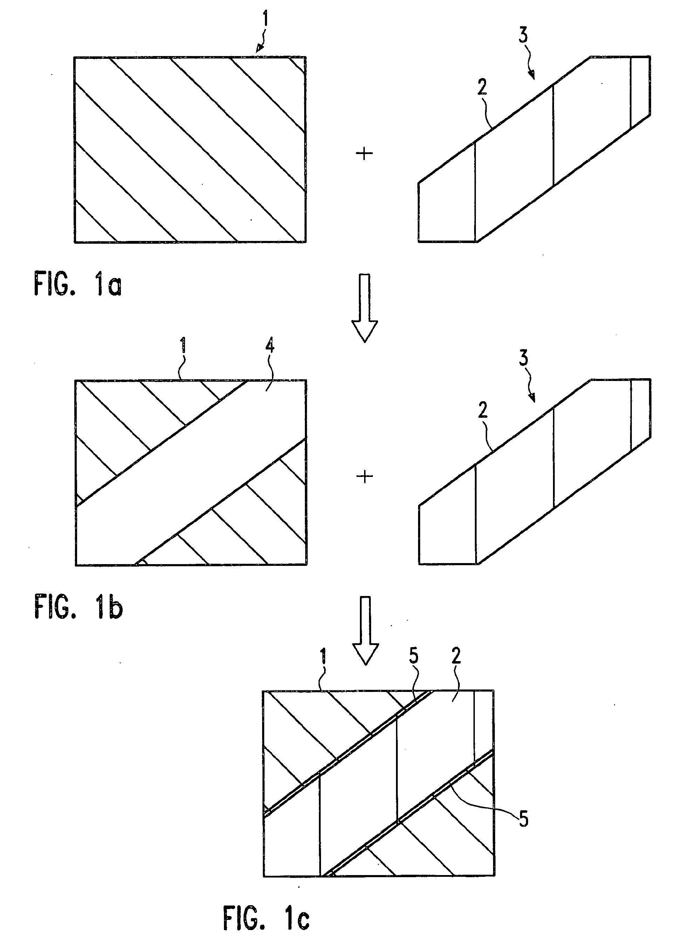

Während die Verfälschung des Farbeindrucks meist noch tolerierbar ist, sind die Blitzer äußerst auffallend, wie durch die Gegenüberstellung exakt positionierter Farben in Fig. 1A und versetzt positionierter Farben in Figur 1B gezeigt ist.

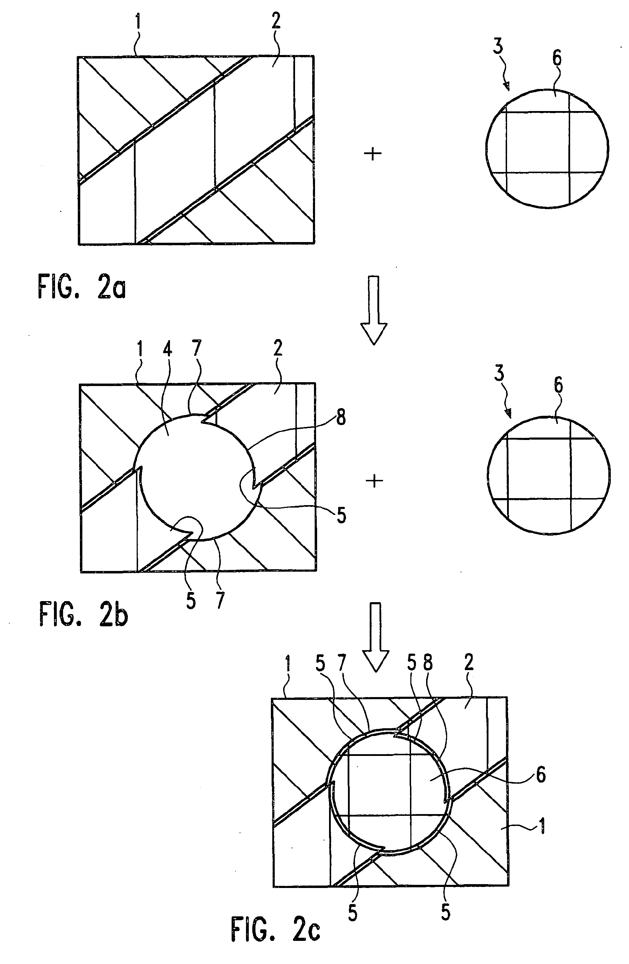

Zur Behebung des Blitzer-Problems ist es bekannt, die hellere Farbe zu vergrößern bzw. räumlich zu überfüllen. Damit erhält man zwar eine größere Überdeckung der Farben, aber die Blitzer verschwinden, wie durch die Gegenüberstellung von versetzt positionierten Farben in Fig. 2A und überdeckten Farben in Fig. 2B gezeigt ist. Bei der Vergrößerung eines Objekts muss im späteren Druckvorgang dafür Sorge getragen werden, dass der überdeckende Teil durchscheinend (translucent) gedruckt wird, da sich sonst das Problem auf den Rand des vergrößerten Objekts verlagert.

Das soeben beschriebene Verfahren, das dieses Problem behebt, hat den Namen "Trapping" (Überfüllung). Trapping wird in unterschiedlichen Produkten am Markt angeboten. Es ist z.B. Bestandteil von Raster Image Prozessoren (RIPs) der Seitenbeschreibungssprache (page description language, PDL) Adobe PostScript® Level 3, der von der Firma Heidelberger Druckmaschinen AG angebotenen Software SuperTrap® oder der Software TrapWise®, die von der Fa. Creo angeboten wird.

Trapping kann auf zwei verschieden Arten durchgeführt werden. Man kann Trapping auf Objektebene behandeln oder auf Bitmap-Ebene.

In elektrofotographischen Hochleistungsdrucksystemen wurde bisher die Problematik des Trapping auf Bitmap-Ebene gelöst (siehe z.B. die WO 2006/069980 A1), da auf Bitmap-Ebene die Druckdaten ohne Verzögerung automatisch verarbeitet werden können. Entsprechende Trapping-Verfahren können deshalb in ein elektrofotographisches Hochleistungsdrucksystem integriert werden, ohne dass der Druckbetrieb hierdurch beeinträchtigt würde.

Bei der Behandlung des Trappings auf Bitmap-Ebene fehlt jedoch die Information zu den Objekten, wodurch das Trapping auf Bitmap-Ebene prinzipbedingt wesentlich weniger effizient ist als das Trapping auf Objektebene.

Die oben angegebenen am Markt erhältlichen Produkte, die Bestandteile von Rasterimageprozessoren (RIPs) der Seitenbeschreibungssprache Adobe PostScript® Level 3, der von der Firma Heidelberger Druckmaschinen AG angebotenen Software SuperTrap® oder der Software TrapWise® sind, die von der Firma Creo angeboten wird, erzeugen an den Grenzen der Objekte zusätzliche Trapping-Objekte, die die Wirkung der Passer-Probleme reduzieren. Diese zusätzlichen Trapping-Objekte erhöhen wesentlich das Datenvolumen der entsprechenden Druckdatendatei. In Extremfällen kann sich das Datenvolumen sogar verzehnfachen, da die Anzahl der einzelnen Objekte vervielfacht werden kann. Bei diesen bekannten Lösungen wird das Trapping interaktiv ausgeführt, so dass ein erfahrener Benutzer in Abhängigkeit von der zu trappenden Vorlage die Erzeugung der zusätzlichen Trapobjekte effizient steuert. Diese Verfahren haben sich beim Offset-Druck sehr bewährt, bei welchen in der Regel sehr viel Zeit zu Verfügung steht, um vor dem Druckvorgang die Druckvorlage entsprechend zu bearbeiten und interaktiv ein Trapping durchzuführen.

Aus der US 2003/017934 A1 ist ein Verfahren bekannt, bei welchem in einem elektrofotographischen Drucker ein Trapping ausgeführt wird. Bei diesem Verfahren werden von den Objekten Kantenlisten angefertigt, und Objekte, die nicht einer vorbestimmten Form entsprechen, können in entsprechende Standardformen aufgeteilt werden. Mit den Kantenlisten werden somit Informationen der Objekte gespeichert, bevor sie gerastert werden. Das Trapping selbst erfolgt auf Bitmap-Ebene, wobei die zusätzlichen Informationen der Objekte z.B. in Form der Kantenlisten, mit berücksichtigt werden. Mit diesem Verfahren wird somit der Nachteil des Trappings auf Bitmap-Ebene, dass Informationen zu den Objekten nicht mehr vorhanden sind, etwas verringert. Jedoch ist das Erstellen dieser Kantenlisten zum einen aufwendig und zudem werden aus einzelnen Objekten mehrere Objekte erzeugt, was die Bearbeitung wieder erschwert. Weiterhin sind die so erzeugten Objekte nicht mehr identisch mit den ursprünglichen Objekten. Objekte mit komplexen Formen können mit diesem Verfahren nicht oder nur sehr eingeschränkt bearbeitet werden.

Aus der US 5,666,543 geht ein Verfahren zum Trapping von in einer Druckseitensprache (PDL - Page Description Language) vorliegenden Druckdaten hervor. Hierbei werden die Druckdaten, bevor sie einem Rasterimageprozessor (RIP) zugeführt werden, zunächst analysiert und Trapping-Instruktionen werden erzeugt. Die Trapping-Instruktionen geben an, ob die Druckdaten Text oder Grafik umfassen und ob sie unter Verwendung eines Formenverzeichnisses (Shape Directory) im RIP getrappt werden sollen. Das Formenverzeichnis wird bei der Analyse der Druckdaten erzeugt und an den RIP übermittelt. Das Formenverzeichnis ist eine Liste der Formen der Objekte. Die Trapping-Bereiche bzw. Überfüllungen werden beim Rastern im RIP erzeugt. Dieses bekannte Verfahren entspricht dem aus der US 2003/017934 A1 bekannten Verfahren, wobei das Formenverzeichnis der Kantenliste entspricht.

Aus der US2005/0012946 A1 ist ein Verfahren bekannt, welches Objekte paarweise miteinander vergleicht und die erzeugten Überfüllungen als weitere Objekte einer Display Liste zufügt. Damit wird ein effizientes Trapping auf Objekt-Ebene vor dem Rastern ermöglicht.

Der Stand der Technik kann somit dahingehend zusammengefaßt werden, dass es einerseits Trapping-Verfahren gibt, die auf Objektebene trappen. Diese Verfahren sind jedoch nicht geeignet, in einer digitalen elektronischen Druckmaschine während des Druckvorganges das Trappen in Echtzeit durchzuführen. Diese Verfahren sind vor allem für den Offset-Druck vorgesehen, bei welchem mit einem externen Rasterimageprozessor die Bilddaten bearbeitet werden. Andererseits ist es bekannt, Trapping bei digitalen elektronischen Druckern in Echtzeit durchzuführen. Hier erfolgt das Trapping jedoch auf Bitmap-Ebene, wobei begrenzte Informationen zu den Objekten mittels Kantenlisten oder Formenverzeichnissen dem Trapping auf Bitmapebene zugänglich gemacht werden.

Bisher ist man davon ausgegangen, dass Trapping auf Objektebene in Echtzeit in einer digitalen Druckmaschine nicht durchführbar ist, da ein Benutzer nicht interaktiv das Trapping auf die Vielzahl unterschiedlicher Regeln einwirken kann, und das Trapping auf Objektebene derart großvolumige Dateien erzeugt, die nicht in Echtzeit abarbeitbar sind.

Elektrofotografische Hochleistungsdrucksysteme sind oft Bestandteil digitaler Produktionsdruck-Umgebungen, in welchen die Vor- und Nachbearbeitung bedruckter Medien automatisch gesteuert ausgeführt wird. Die Dokumentendaten werden in solchen Produktionsdruck-Umgebungen in Form von Dokumentendatenströmen zwischen den einzelnen Arbeitsstationen übermittelt.

Verschiedene Druckdatenströme und Drucksysteme, die zur Verarbeitung verschiedenster Druckdatenströme einschließlich AFP und IPDS geeignet sind, sind in der bereits o.g. Veröffentlichung "The World of Printers", Dr. Gerd Goldmann (Herausgeber), Océ Printing Systems GmbH, 7. Ausgabe (Nov. 2002), ISBN 3-00-001019-X beschrieben. In Kapitel 14 (Seiten 343 bis 361) ist dazu z.B. das Druckserversystem Océ PRISMAproduction beschrieben. Dieses flexible Druckdaten-Serversystem ist beispielsweise dazu geeignet, Druckdaten von Datenquellen wie einem Quell-Computer, der Druckdaten in einer bestimmten Druckdatensprache wie AFP (Advanced Function Presentation), MO:DCA, PCL (Printer Command Language), PostScript, SPDS (Siemens Print Data Stream), in der von der Firma Adobe Systems Inc. entwickelten Portable Document Format (PDF) oder in der von der Firma Xerox Corporation entwickelten Sprache Line Coded Document Data Stream (LCDS) zu empfangen, in ein bestimmtes Ausgabeformat umzuwandeln, z.B. in das Intelligent Printer Data Stream (IPDS) Format und die Daten in diesem einheitlichen Ausgabeformat an ein Druckproduktionssystem zu übertragen. In Kapitel 10 sind verschiedene Technologien zum Farbdruck beschrieben.

Bei der Spezifikation und Weiterentwicklung von Druckdatenströmen besteht mitunter das Problem, dass im Datenstrom neue Kommandos eingefügt werden müssen, um den technischen Weiterentwicklungen von Computern, Druckgeräten und/oder Nachverarbeitungsgeräten Rechnung zu tragen. Das Festlegen derartiger Erweiterungen ist meist ein relativ aufwendiges Verfahren, bei dem verschiedene Industriepartner zusammenarbeiten müssen, um die Änderungen bzw. Neuerungen untereinander abzustimmen.

In der US-A-6,097,498 ist beschrieben wie drei neue Datenstrom-Kommandos, nämlich WOCC, WOC sowie END dem Intelligent Printer Datastream™ (IPDS™) hinzugefügt werden.

Eine weitere Möglichkeit, zusätzliche Steuerungsdaten in einem AFP-Datenstrom zu hinterlegen, besteht darin, Daten in sogenannten object containern abzulegen, siehe z.B. in der Publikation Nr. SC31-6802-05 die Seiten 93-95.

In der von der Anmelderin stammenden WO 03/069548 sind weitere Maßnahmen zum Einfügen neuer Steuerungsinformationen in AFP bzw. IPDS Datenströme beschrieben.

In der IBM-Publikation SC31-6805-05 mit dem Titel "Image Object Architecture Reference", 6. Ausgabe (August 2002) wird beschrieben wie in den Datenströmen AFP und IPDS Dokumentenobjekte wie Text, Bilder, Grafiken, Barcodes und Fonts behandelt werden. Dafür wird eine sogenannte Object Content Architecture (OCA) definiert, in denen für die jeweiligen Objekte bestimmte Datenstrukturen und Steuerungs- bzw. die Objekte kennzeichnende Parameter festgelegt werden, für Bilder beispielsweise die sogenannte Image Object Content Architecture (IOCA), für Grafiken eine entsprechende GOCA, für Präsentationstexte eine PTOCA usw. Die IOCA wird in dem oben genannten Dokument ausführlich beschrieben. Auf den Seiten v bis vii des Dokuments sind weitere für das Verständnis der Datenströme hilfreiche IBM-Dokumente genannt.

Details des Dokumentendatenstroms AFP™ sind in der Publikation Nr. F-544-3884-01, herausgegeben von der Firma International Business Machines Corp. (IBM) mit dem Titel "AFP Programming Guide and Line Data Reference" beschrieben. Der Dokumentendatenstrom AFP wurde weiterentwickelt zu dem Dokumentendatenstrom MO:DCA™, welcher z.B. in der IBM-Publikation SC31-6802-06 (Januar 2004) mit dem Titel "Mixed Object Document Content Architecture Reference" beschrieben ist. Details dieses Datenstroms sind auch in der US-A-5,768,488 beschrieben. Dort werden auch bestimmte Felddefinitionen des Datenstroms, die Steuerungsdaten enthalten, sogenannte "structures fields" erläutert.

AFP/MO:DCA-Datenströme werden im Zuge von Druckproduktionsaufträgen häufig in Datenströme des Intelligent Printer Data Stream™ (IPDS™) umgewandelt. In der US-A-5,982,997 ist ein solcher Prozeß gezeigt. Details zu IPDS Datenströmen sind z.B. im IBM-Dokument Nr. S544-3417-06, "Intelligent Printer Data Stream Reference", 7. Ausgabe (Nov. 2002) beschrieben.

IPDS und AFP Datenströme enthalten und/oder referenzieren in der Regel sogenannte Resourcen, die Daten enthalten, die zur Ausgabe der Dokumente benötigt werden. Die Daten einer Resource können dabei für einen oder mehrere Druckaufträge, die wiederum mehrere Dokumente bzw. Dokumententeile enthalten, durch einfache Referenzierung mehrfach verwendet werden, ohne mehrfach übertragen werden zu müssen. Dadurch wird die Menge der von einer Verarbeitungseinheit (z.B. einem die Dokumente erzeugenden Host-Computer) an eine nachfolgende Verarbeitungseinheit (z.B. einen Druckserver oder ein Druckgerät) zu übertragenden Daten verkleinert, insbesondere, wenn Daten von einer Vielzahl von Dokumenten zu übertragen sind, die teilweise gleiche Daten aufweisen bzw. benötigen. Beispiele solcher Resourcen sind Zeichensätze (Fonts) oder mit Dokumenten zu überlagernde Formulare (Overlays). Die Resourcen können dabei im Druckdatenstrom selbst enthalten sein oder getrennt von diesem zwischen den beteiligten Systemen übertragen werden und innerhalb verschiedener Dokumente jeweils nur referenziert sein. Dabei kann insbesondere vorgesehen sein, dass die Resourcen im weiterverarbeitenden Gerät (z.B. Druckserver oder Druckgerät) bereits gespeichert sind, so dass sie nicht erneut mit jedem Druckauftrag übertragen werden müssen, sondern lediglich referenziert werden müssen.

Bei der Darstellung von AFP-Dokumentendaten werden Resourcen, die im AFP-Dokumentendatenstrom an verschiedenen Stellen stehen bzw. aus verschiedenen Quellen stammen, mit den entsprechenden variablen Daten der Dokumente, z.B. aus Datenbanken stammende Daten für Rechnungen, wie z.B. Rechnungsadressat, Rechnungsnummer, Rechnungsbetrag usw. zusammengeführt. Die Resourcendaten können dabei als interne Resourcen im Dokumentendatenstrom eingebunden sein oder als externe Resourcen über einen Resourcennamen aus Bibliotheken aufgerufen werden. In einem Parsing-Vorgang werden weiterhin die Daten auf Konsistenz hin geprüft.

Im Dokument "Print Services Facility for OS/390 & z/OS, Introduction", Vers. 3, Release 3.0 Nr. G544-5625-03 der Firma IBM vom März 2002 sind Details beschrieben, wie ein sog. Line Data- bzw. MO:DCA-Dokumentendatenstrom in einen IPDS-Datenstrom umgewandelt wird. Das Softwareprogramm Print Service Facility (PSF) kombiniert dabei variable Dokumentendaten mit Resourcendaten um Ausgabedaten, die an einen Drucker als Ausgabegerät gesandt werden, zu verwalten und zu steuern. Von der Anmelderin werden Softwareprodukte unter den Handelsnamen Océ SPS und Océ CIS entwickelt und vertrieben, die entsprechende Funktionen aufweisen.

Aus der US 2005/0024668 A1 ist ein Verfahren zum sicheren Verwalten und Zuordnen von Resourcen bei der Bearbeitung von resourcenbasierten Druckaufträgen bekannt. Aus der WO-A1-2004/0008379 ist ein Verfahren zur Verarbeitung von Resourcendaten in einem Dokumentendatenstrom bekannt.

Aus Stollnitz, J. u.a., "Reproducing Color Images Using Custom Inks", ACM Proceedings of the 25th annual conference on Computer graphics and interactive techniques, SIGGRAPH '98, ACM Press, July 1998 sind Verfahren zur Farbwidergabe in Offset-Druckmaschinen bekannt.

Die in den weiter oben genannten Publikationen bzw. Dokumenten und Patentanmeldungen beschriebenen Verfahren, Systeme und Maßnahmen können in Verbindung mit der vorliegenden Erfindung Anwendung finden.

Der Erfindung liegt die Aufgabe zugrunde, ein Verfahren, ein Computerprogramm und ein System zum Trapping von Druckdaten zu schaffen, wobei das Trapping weitgehend automatisch ausführbar ist. Das Trapping kann insbesondere in einem elektronischen, digitalen Hochleistungsdrucksystem ausführbar sein.

Diese Aufgabe wird durch die in den unabhängigen Patentansprüchen angegebene Erfindung gelöst. Vorteilhafte Ausgestaltungen der Erfindung sind in den jeweiligen Unteransprüchen angegeben.

Bei einem ersten Aspekt der Erfindung werden zum Trapping von Druckdaten mit einer Vielzahl von Objekten die Objekte einzeln in eine Bildpunkt-Datei überführt und jeweils folgende Schritte ausgeführt:

- Ermitteln von mindestens einer Überfüllung für das jeweilige Objekt bezüglich der an das Objekt angrenzenden Farbbereiche in der Bildpunkt-Datei gemäß vorbestimmten Trapping-Regeln und
- Einfügen des Objektes und der mindestens einen Überfüllung in die Bildpunkt-Datei, wobei beim Einfügen das Objekt und die Überfüllung in die Bildpunkt-Datei gerastert werden.

Durch das Überführen einzelner Objekte kann der Vorteil erreicht werden, dass ohne das Anfertigen von zusätzlichen Tabellen oder Listen über die Form der Objekte die vollständigen Informationen der Objekte für die Berechnung der Überfüllungen zur Verfügung stehen. Da dann unmittelbar die Überfüllungen in der Bildpunkt-Datei entweder beim Ausstanzen oder beim Rastern erzeugt werden, ist es nicht notwendig, für die Überfüllungen zusätzliche Objekte auf Objekt-Ebene zu erzeugen. Das Ermitteln der Überfüllungen anhand der einzelnen Objekte bezüglich der Bildpunkt-Datei und das Einfügen der Überfüllungen in der Bildpunkt-Datei kann somit ohne Verzögerung des Druckvorganges im Druckdatencontroller des Druckgerätes ausgeführt werden.

Das Überführen einzelner Objekte bedeutet nicht zwangsläufig, dass zu einem bestimmten Zeitpunkt nur ein einziges Objekt überführt werden kann. Es ist auch möglich, dass mehrere Objekte parallel von den Druckdaten in die Bildpunkt-Datei überführt werden. Einzeln bedeutet vielmehr, dass die Objekte, die überführt werden, sich nicht örtlich im Bild mit anderen Objekten überschneiden, die gleichzeitig überführt werden, so dass sich hierdurch die Berechnung der Überfüllungen erheblich verkomplizieren würde.

Die Überfüllungen werden sowohl beim Ausstanzen durch Verringern des Bereiches für die einzufügende Objekte als auch beim Rastern durch Erweitern der Objekte mit Überfüllungen erzeugt.

Da die Objekt einzeln in die Bildpunkt-Datei überführt werden, kann das Trapping ohne Verzögerung des Druckvorganges in einem Druckserver und/oder Druckgerät ausgeführt werden. Es ist somit möglich, einen Druckdatenstrom "on the fly" zu trappen.

Vorzugsweise wird das erfindungsgemäße Verfahren in Echtzeit in einem Druckdatencontroller eines Druckgerätes durchgeführt.

In einem zweiten Aspekt der vorliegenden Erfindung, der alleine oder in Verbindung mit dem ersten Aspekt angewandt werden kann, wird ein Verfahren zum Trapping von Druckdaten mit einer Vielzahl von Objekten vorgesehen, bei dem Überfüllungen nur an Rändern jeweils eines der Objekte ermittelt werden, wenn sich die Helligkeit des jeweiligen Objektes zum angrenzenden Bereich um einen Differenzbetrag unterscheidet, der größer als der vorbestimmte Schwellenwert ist. Hierdurch ist es möglich, bei aneinander angrenzenden Objekten mit ähnlicher Helligkeit keine Überfüllungen vorzusehen, da diese aufgrund der ähnlichen Helligkeiten kaum in Erscheinung treten. Dadurch entfällt die Berechnung einer erheblichen Anzahl von Überfüllungen, wodurch es einfacher wird, das erfindungsgemäße Verfahren in Echtzeit durchzuführen. Dieses Verfahren ist vorzugsweise derart weitergebildet, dass bei einem Objekt mit Highlight Color Farbe immer Überfüllungen ermittelt werden, selbst wenn das benachbarte Objekt eine ähnliche Helligkeit besitzen sollte, da bei einer nicht korrekten Registrierung eines aus Highlight Color Farbe bestehenden Objektes immer die so genannten "Blitzer" entstehen, die schmale weiße Lücken zwischen angrenzenden Objekten sind, die vermieden werden sollten.

In einem dritten Aspekt der vorliegenden Erfindung, der alleine oder in Verbindung mit den zuvor genannten Aspekten angewandt werden kann, werden Überfüllungen im Bereich einer schmalen, langen Spitze, die etwa eine entsprechende Spitze bilden, nicht über eine vorbestimmte Breite der Überfüllung in X-Richtung und in Y-Richtung bezüglich des äußersten Punktes der Spitze des nicht getrappten Objektes hinaus erstreckt. Gemäß diesem Aspekt der Erfindung kann die Überfüllung einfach abgeschnitten werden, wenn ein bestimmter Abstand zur Spitze erreicht ist. Dieses Verfahren ist mit geringstem Rechenaufwand durchführbar. Hierdurch wird die Ausführung des erfindungsgemäßen Verfahrens in Echtzeit und ohne aufwändige Recheneinrichtungen erleichtert.

Gemäß einem vierten Aspekt der vorliegenden Erfindung, der alleine oder in Verbindung mit den zuvor genannten Aspekten angewandt werden kann, wird ein Verfahren zum Trapping von Druckdaten mit einer Vielzahl von Objekten vorgesehen. Dabei werden die Druckdaten zusammen mit Trapping-Anweisungen in einem Druckdatenstrom zum Ausführen des Trappings erzeugt, an ein Druckdatenverarbeitungsgerät übertragen und/oder im Druckdatenverarbeitungsgerät verarbeitet, wobei der Druckdatenstrom Resourcendaten referenziert, die Trapping-Parameter und/oder Trapping-Anweisungen enthalten.

Der Druckdatenstrom kann insbesondere an ein Druckdatenverarbeitungsgerät, z.B. an ein Druckgerät übertragen werden. Die Trapping-Parameter und/oder Trapping-Anweisungen sind vorzugsweise in einem Druckdatenprotokoll enthalten.

Es kann auch ein Verfahren zum Trapping von Druckdaten mit einer Vielzahl von Objekten vorgesehen sein, bei dem Druckdaten zusammen mit Trapping-Anweisungen in einem Druckdatenstrom zum Ausführen des Trappings in einem Druckgerät übertragen werden. Die Trapping-Anweisungen können insbesondere in einem Druckdatenprotokoll enthalten sein. Der Druckdatenstrom referenziert dabei Ressourcendaten, die Trapping-Parameter und/oder Trapping-Anweisungen enthalten.

Die Verwendung der Ressourcenstruktur für das Trapping ist insbesondere dann besonders vorteilhaft, wenn ein Operator eines Drucksystems durch Speichern entsprechender Trapping-Ressourcen in einem Druckdatenverarbeitungsgerät wie z.B. einem Druckserver, einem Rasterprozessor oder einem zum Beispiel in einem Druckgerät angeordneten Druckdatencontroller einstellt. Die Einstellung dieses Geräts kann dabei vorteilhaft individuell auf ein bestimmtes Trapping-Verfahren erfolgen. Vorteilhaft kann dabei weiterhin sein, dass die Trapping-Parameter und/oder Trapping-Anweisungen nicht für jeden Druckauftrag erneut an das das Trapping ausführende Gerät zu übermitteln sind.

Der vierte Aspekt der Erfindung kann dabei insbesondere auch das Erzeugen und Verwalten entsprechender Trapping Resourcendaten erfassen. Diese können z.B. in einem Host Computer, einem Client oder einem Druckserver als Datei oder Dateisammlung (Bibliothek) erzeugt und verändert, in diesen Computern verwaltet und gespeichert und zwischen Ihnen ausgetauscht werden. Sie können auch mit einem Datenstrom oder unabhängig von einem Datenstrom mit einem Druckgerät ausgetauscht, insbesondere an ihn übertragen oder von ihm empfangen werden, in diesem gespeichert, erzeugt, verändert oder verwaltet werden.

Gemäß einem fünften Aspekt der Erfindung, der alleine oder in Verbindung mit den zuvor genannten Aspekten angewandt werden kann, ist vorgesehen, dass zum Trapping von Druckdaten die Druckdaten in einem Druckdatenstrom zusammen mit Trapping-Anweisungen erzeugt, bereitgestellt und/oder übertragen werden. Der Druckdatenstrom ist dabei in unterschiedlichen Ebenen strukturiert und die Trapping-Anweisungen weisen ebenenbezogene Vorrangsregeln auf. Der Druckdatenstrom kann insbesondere an ein Druckdatenverarbeitungsgerät übertragen werden. Er kann an ein Druckgerät übertragen werden.

Gemäß einem sechsten Aspekt der vorliegenden Erfindung, der alleine oder in Verbindung mit den zuvor genannten Aspekten angewandt werden kann und insbesondere in Verbindung mit dem fünften Aspekt, werden zum Trapping von Druckdaten die Druckdaten in einem Druckdatenstrom zusammen mit Trapping-Anweisungen erzeugt, übertragen und/oder im Druckdatenverarbeitungsgerät verarbeitet. Der Druckdatenstrom ist in unterschiedlichen Ebenen strukturiert. Je höher die Ebene ist, desto größer ist ihr Bereich, auf den die in der jeweiligen Ebenen enthaltenen Anweisungen wirken. Gemäß diesem Aspekt der Erfindung haben Trapping-Anweisungen aus unteren Ebenen Vorrang gegenüber Trapping-Anweisungen aus höheren Ebenen. Dem entsprechend kann insbesondere eine Vorrang-Anweisung gemäß dem fünften Aspekt der Erfindung vorgesehen sein. Der Druckdatenstrom kann insbesondere an ein Druckdatenverarbeitungsgerät übertragen werden. Er kann an ein Druckgerät übertragen werden.

Üblicherweise werden Druckanweisungen, insbesondere Farbanweisungen, in Druckdatenströmen von höheren Ebenen auf untere Ebenen vererbt. Dies bedeutet, dass eine Druckanweisung in einer höheren Ebene automatisch auf alle darunter liegenden Ebenen wirkt. Die Druckanweisungen in höheren Ebenen haben somit üblicherweise Vorrang vor Druckanweisungen in niedrigeren Ebenen.

Beim Trapping ist es hingegen vorteilhaft, wenn die Trapping-Anweisungen aus niedrigeren bzw. unteren Ebenen Vorrang vor Trapping-Anweisungen höherer Ebenen haben, da die Trapping-Anweisungen in einer niedrigeren Ebene in einer direkteren Beziehung zum jeweiligen Objekt stehen und so spezifischer für das jeweilige Objekt sind.

Gemäß einem siebten Aspekt der Erfindung, der alleine oder in Verbindung mit den zuvor genannten Aspekten und insbesondere mit dem fünften Aspekt angewandt werden kann, werden die Druckdaten in einem Druckdatenstrom zusammen mit Trapping-Anweisungen in ein Druckgerät übertragen und der Druckdatenstrom in unterschiedlichen Ebenen strukturiert. Je höher die Ebene ist, desto größer der Bereich, auf dem die in der jeweiligen Ebene enthaltenen Anweisungen wirken. Gemäß diesem Aspekt ist in der höchsten Ebene eine Trapping-Anweisung vorgesehen, mit welcher das Trapping im gesamten Bereich der höchsten Ebene ein oder ausgeschaltet werden kann. Dies stellt insbesondere eine Art globalen Schalter dar, mit dem Trapping generell ein- oder ausgeschaltet werden kann. Hierdurch wird dem Operator eines Drucksystems die Möglichkeit eingeräumt, Trapping in einem Druckdatenstrom grundsätzlich ein- oder auszuschalten, alleine wenn in die höchste Ebene jeweils die jeweilige Trapping-Anweisung eingesetzt wird. Dieses Verfahren kann insbesondere auch in Kombination mit den oben erläuterten Verfahren verwendet werden, bei dem Trapping-Anweisungen aus unteren Ebenen Vorrang gegenüber Trapping-Anweisungen aus höheren Ebenen haben, wobei diese "Schalter" in der höchsten Ebene diese Vorrang-Regelung bricht. Dem entsprechend kann insbesondere eine Vorrang-Anweisung gemäß dem fünften Aspekt der Erfindung vorgesehen sein.

Bei den oben erläuterten Trapping-Verfahren der unterschiedlichen Aspekte wird das Verfahren üblicherweise mittels Trapping-Parameter und Trapping-Anweisungen gesteuert. In diesen Verfahren der unterschiedlichen Aspekt ist es zweckmäßig, im Druckgerät bzw. in dessen Druckdatencontroller einen Satz Vorgabewerte (Trapping-Parameter und Trapping-Anweisungen) vorzusehen, gemäß welchen das Trapping-Verfahren gesteuert werden kann. Da das Trapping-Verfahren sehr von der Qualität des Druckgerätes bestimmt wird, ist es zweckmäßig einen vollständigen Satz derartiger Vorgabewerte vorzusehen, so dass in der Praxis Druckdaten mit recht wenigen weiteren Parametern und Trapping-Anweisungen an das Druckgerät zu übermitteln sind, die das Trapping-Verfahren individuell auf die jeweiligen Druckdaten abstimmen.

Alle oben genannten Aspekte der Erfindung sind insbesondere in Verbindung mit den eingangs genannten Datenströmen Advanced Function Presentation (AFP) und den davon abgeleiteten Datenströmen wie z.B. MO:DCA oder IPDS vorteilhaft einsetzbar, die nachfolgend auch AFP-/IPDS-Datenströme genannt werden.

Die Bildpunkt-Datei kann eine im klassischen Sinne ausgebildete Bitmap-Datei sein, bei der zu jedem Bildpunkt nur eine Ein-Bit-Information vorgesehen ist. Sie kann jedoch auch eine Bitmap sein, bei der jeder Bildpunkt in mehreren Bits, z.B. 4 oder 8 Bits codiert ist, insbesondere in einer byteweisen Codierung. Dadurch lassen sich z.B. zu jedem Bildpunkt verschiedene Grauwerte, z.B. $2^4$=16 oder $2^8$=256 Grauwerte hinterlegen. Im Rahmen der vorliegenden Beschreibung werden beide Arten von Bildpunktdatei als Bitmaps angesehen.

Bei den genannten Aspekten der Erfindung kann zur Übertragung von Dokumentendatenströmen zwischen einem den Dokumentendatenstrom erzeugenden Datenverarbeitungssystem und einem den Dokumentendatenstrom verarbeitenden Datenverarbeitungssystem als erzeugendes Datenverarbeitungssystem insbesondere ein Host-Computer oder ein Druckserver vorgesehen sein. Das verarbeitende Datenverarbeitungssystem kann insbesondere als Druckserver, als Computer mit einer Parsing-Einheit und/oder als Rasterprozessor und insbesondere als in ein Druckgerät integrierter oder ein an dieses angeschlossener Druckdatencontroller ausgebildet sein. Bei der Ausgabe der Daten von einem Host-Computer an einen in ein Druckgerät integrierten Druckdatencontroller über eines der genannten Systeme wie z.B. einem Druckserver kann dieses System die Daten insbesondere konvertieren, beispielsweise vom MO:DCA-Format in das IPDS-Format.

Die Erfindung wird nachfolgend beispielhaft näher anhand der Zeichnung erläutert. In der Zeichnung zeigen:

Figur 1a bis 1c      schematisch das Einfügen eines Objektes in eine Bitmap-Datei;

Figur 2a bis 2c      schematisch das Einfügen eines Objektes in eine Bitmap-Datei;

Figur 3      schematisch ein Drucksystem in einem Blockschaltbild;

Figur 4      den grundsätzlichen Ablauf des erfindungsgemäßen Verfahrens in einem Flussdiagramm;

Figur 5      das Einfügen eines Objektes in die Bitmap-Datei in einem Flussdiagramm;

Figur 6      Tabellen einzelner Trapping-Parameter;

Figur 7a und 7b      eine Überfüllung im Bereich einer Spitze eines Objektes;

Figur 8a und 8b      eine Überfüllung im Bereich einer Grenzlinie mit sich entlang der Grenzlinie verändernden Helligkeiten;

Figur 9      schematisch ein Beispiel für eine hierarchische Struktur eines IPDS-Druckdatenstromes;

Figur 10, 11, 12      Trapping-Beispiele in einem Druckdatenstrom; und

Figur 13      eine Tabelle zu AFP-/IPDS-Trapping-Parameter-Triplets.

**Grundlegendes Verfahrensprinzip**

Das grundlegende Prinzip des Trapping ist einfach und bereits aus diversen Trapping-Verfahren bekannt: Der hellere Colorant wird etwas in den Bereich ausgedehnt, der von dem dunkleren Colorant besetzt sein soll. Der hellere Colorant wird von dem dunkleren Colorant verdunkelt und soll nicht mehr erkennbar sein. Der dunklere Colorant beziehungsweise die dunklere Farbe ist bestimmend für die Kontur des Objektes.

Das erfindungsgemäße Verfahren zum Trapping von Druckdaten mit einer Vielzahl unterschiedlicher Objekte wird nachfolgend anhand der Figuren 1a bis 1c und 2a bis 2c erläutert.

Grundsätzlich liegen die Druckdaten in einem Format vor, in dem einzelne Objekte definiert sind. In der Regel sind dies eine Vielzahl von Objekten. Die Druckdaten enthalten somit in der Regel vor dem Trapping Objekte in Vektordarstellung und andere vorbestimmte Objekte. Mit dem Einfügen der Trapping-Bereiche werden die Druckdaten gleichzeitig zu einer Bitmap-Datei gerastert. Bei dem vorliegenden Verfahren erfolgt dies dadurch, dass gleichzeitig die mehrere Objekte umfassenden Druckdaten als auch eine Bitmap-Datei vorgehalten werden, in welche die Druckdaten zu überführen sind. Die Objekte werden einzeln in die Bitmap-Datei überführt. Figur 1a zeigt ein Rechteck 1, das in einer Bitmap-Datei enthalten ist und mit einer Farbe mit einer vorbestimmten Helligkeit gefüllt ist. Weiterhin zeigt Figur 1 einen schräg verlaufenden Balken 2, der ein Objekt 3 der Druckdaten ist. Dieser Balken soll in das Rechteck 1 derart eingefügt werden, dass er von der linken unteren Ecke des Rechtecks 1 sich zur rechten oberen Ecke erstreckt. Der Balken 2 ist heller als das Rechteck 1.

Der Balken 2 ist Bestandteil der Druckdaten und in diesen als Vektorobjekt dargestellt. Der Balken 2 ist somit ein Objekt. Das Rechteck 1 ist durch Bildpunkte in der Bitmap-Datei dargestellt. Es ist deshalb kein Objekt.

In dem in der Bitmap-Datei enthaltenen Rechteck 1 wird zunächst der Bereich 4 ausgestanzt (knock out), in den der Balken 2 eingefügt werden soll (Figur 1b). Hierdurch wird vermieden, dass es eine großflächige Überlappung der Farben des Rechtecks 1 und des Balkens 2 gibt, wodurch die Farbe des Balkens 2 originalgetreu zur Geltung kommt. Da der Balken heller als das Rechteck 1 ist, entspricht der ausgestanzte Bereich 4 exakt der Größe des Balkens 2.

Danach wird das Objekt 3 in Form des Balkens 2 in die Bitmap-Datei in den ausgestanzten Bereich 4 eingefügt. Hierbei wird das Objekt 3 zu Bildpunkten gerastert, die an den entsprechenden Stellen in der Bitmap-Datei eingetragen werden. Da das Objekt 3 heller ist als das angrenzende Rechteck 1, wird der Balken 2 in der Bitmap-Datei an den Rändern zum dunklen Ausschnitt der Bitmap-Datei jeweils um einen Trapping-Bereich bzw. eine Überfüllung 5 erweitert, die sich über den ausgestanzten Bereich 4 hinaus erstreckt. Die Kontur des Balkens 2 wird durch die dunklere Farbe des Rechtecks 1 begrenzt, das exakt in der Form des Balkens ausgeschnitten ist.

Beim Rastern des Objektes 3 sind hier die vorab anhand des Objektes berechneten Trapping-Bereiche bzw. Überfüllungen 5 hinzugefügt worden.

In das in Figur 1c gezeigte Bild, mit dem das Rechteck 1 kreuzenden Balken 2, soll nun ein Kreis 6 in das Zentrum des Rechtecks 1 eingefügt werden. Der Kreis 6 ist mit einer Farbe gefüllt, deren Helligkeit zwischen der des Rechtecks 1 und des Balkens 2 liegt.

Der Durchmesser des Kreises 6 ist größer als die Breite des Balkens 2, so dass sich der Kreis beidseitig über den Balken 2 hinaus in den Bereich des Rechtecks 1 erstreckt. Beim Ausstanzen des Bereichs 4 für den Kreis wird der an dem Bereich des Rechtecks 1 angrenzende Rand 7 des Kreises exakt mit der Größe des Kreises ausgestanzt, wohingegen der Rand 8 des Kreises, der an den helleren Balken 2 angrenzt, mit einer etwas verminderten Größe ausgestanzt wird. Hierdurch erstreckt sich der Balken 2 in den Bereich des Kreises 6. Dieser sich in den Bereich des Kreises 6 erstreckende Bereich bildet eine Überfüllung 5 (Figur 2b).

Danach wird der Kreis selbst, der in den Druckdaten ein Objekt 3 bildet, in die Bitmap-Datei in den ausgestanzten Bereich 4 eingefügt. Hierbei wird der Kreis 6 zu Bildpunkten gerastert, die an den entsprechenden Stellen in die Bitmap-Datei eingetragen werden. Da der Kreis 6 heller als der Bereich des Rechtecks 1 ist, wird der an dem Bereich des Rechtecks 1 angrenzende Rand 7 des Kreises 6 um eine Überfüllung 5 erweitert, die sich in den Bereich des Rechtecks 1 hinein erstreckt. Hier wird die Kontur des Kreises durch den Rand der dunklen Farbe des Rechtecks 1 definiert.

An den am Balken 2 angrenzenden Rand 8 des Kreises 6 wird der Kreis exakt mit seiner Größe in die Bitmap-Datei eingefügt, da hier die gegenüber dem Balken 2 dunklere Farbe des Kreises 6 die Kontur des Kreises definiert.

Oben ist anhand von zwei Objekten (Balken 2, Kreis 6) das Einfügen derselben in die Bitmap-Datei erläutert. Hierbei werden die Objekte einzeln in die Bitmap-Datei eingefügt, wobei an den Objekten selbst die Trapping-Bereiche bzw. Überfüllungen 5 berechnet werden und entsprechend den ermittelten Überfüllungen erfolgt das Ausstanzen und Einfügen der Objekte. Beim Einfügen der Objekte werden diese in die Bitmap-Datei gerastert.

Oben wurde das Prinzip der vorliegenden Erfindung anhand von Objekten erläutert, die mit einer Farbe vorbestimmter Helligkeit gefüllt sind. Der Ausdruck "Farbe" wurde hierbei vereinfacht verwendet. Eine Farbe setzt sich im Mehrfarbendruck in der Regel aus mehreren Coloranten (Farbstoffen) zusammen, die je nach Bedarf in unterschiedlichen Verhältnissen überlagert werden. Die einzelnen Coloranten werden von den Steuerungsprogrammen in separaten Farbauszügen behandelt. Zur Erzeugung eines Gesamtbildes werden alle Farbauszüge überlagert. Bei einem Mehrfarbendruck erfolgt das Ausstanzen durch alle Farbauszüge (planes) hindurch, wohingegen die Überfüllungen für die einzelnen Farbauszüge separat ermittelt und eingefügt werden.

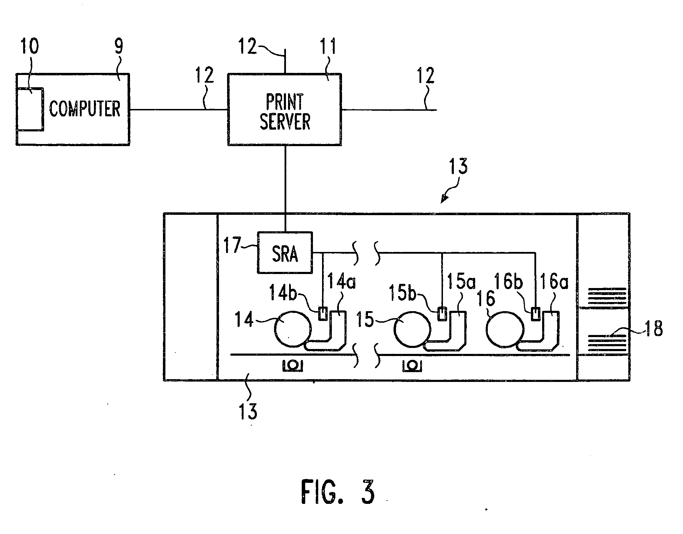

In Figur 3 ist ein Drucksystem gezeigt, mit dem farbige Bilddaten in einem auf einem Anwendercomputer 9 ablaufenden Anwender-Softwareprogramm 10 erzeugt werden. Die so erzeugten Bilddaten werden als Druckdaten einem Druckserver 11 zugeführt. Diese Druckdaten liegen in einer Druckdatensprache wie z.B. AFP, PostScript, PDF oder PCL, vor. Der Druckserver 11 ist an ein Netzwerk 12, wie z.B. dem Internet angeschlossen, und kann von unterschiedlichen Anwendercomputern Druckdaten empfangen.

Der Druckserver 11 ist mit einem Druckgerät 13 verbunden. Im Druckgerät 13 befinden sich mehrere Druckstationen. In Figur 3 sind lediglich drei Druckstationen 14, 15, 16 gezeigt. Ein Druckgerät zum Drucken mit einer Highlight-Color-Farbe benötigt lediglich zwei Druckstationen, zum Drucken mit zwei Highlight-Color-Farben drei Druckstationen und zum Drucken in einem Vollfarbraum (YMCK) vier bis sechs Druckstationen. Eine jede Druckstation umfasst eine Entwicklerstation 14a, 15a, 16a, eine Belichtungseinheit 14b, 15b, 16b, wie z.B. einen Leuchtdiodenkamm, und weitere an sich bekannte elektrofotografische Komponenten, wie eine Fotoleitertrommel und eine Corotroneinrichtung.

Die vom Druckserver 11 empfangenen Daten werden von einem im Druckgerät 13 enthaltenen scaleable raster architecture (SRA) Druckdatencontroller 17 empfangen. Im Druckdatencontroller 17 wird in Echtzeit das Trapping-Verfahren ausgeführt und die Druckdaten in einzelne Bildpunkte aufgerastert und farbgenau an die Druckwerke 14, 15, 16 bzw. die entsprechenden Leuchtdiodenkämme 14b, 15b, 16b zur Bildung eines latenten Bildes auf der entsprechenden Fotoleitertrommel zugeführt. Die so entstandenen elektrostatischen Bilder werden dann in bekannter Weise elektrofotografisch mit Toner entwickelt und auf einen Aufzeichnungsträger 18 gedruckt, der hier einzelne Papierblätter umfasst.

Der Rasterprozess im Druckdatencontroller kann zudem einen screening Prozess umfassen, bei dem die gerasterten Bildpunkte maschinenspezifisch aufbereitet werden, bevor sie an die Leuchtkämme 14b, 15b, 16b ausgegeben werden. Der Screening-Prozess kann dem Trappingprozess nachgeschaltet sein oder auch in einem Schritt mit dem Trappingprozess bzw. dem Rasterprozess ausgeführt werden. Die Ausführung in einem gemeinsamen Schritt ist insbesondere bei 1-Bit-Druckdaten möglich (sogenannte bilevel Druckdaten), die Ausführung in getrennten Schritten ist in der Regel bei Druckdaten, die in mehreren Bits codiert sind (Graustufendaten, sog. Mulitlevel Druckdaten) zu bevorzugen.

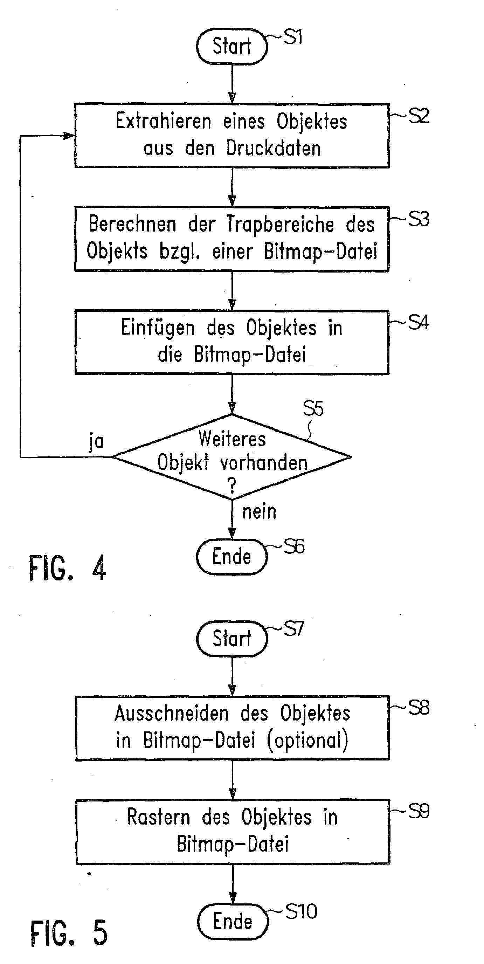

Der Verfahrensablauf des im Druckdatencontrollers 17 ausgeführten Verfahrens zum Trappen und Rastern der Druckdaten wird nachfolgend anhand der in den Figuren 4 und 5 gezeigten Flussdiagramme näher erläutert. Das Verfahren startet zunächst mit dem Schritt S1 (Figur 4). Im Schritt S2 wird ein einzelnes Objekt aus den Druckdaten extrahiert, das in eine Bitmap-Datei an der entsprechenden Stelle, in der es sich in den Druckdaten befindet, eingefügt werden soll.

Im Schritt S3 werden Trap-Bereiche bzw. Überfüllungen des Objektes bezüglich der in der Bitmap-Datei vorhandenen und an das Objekt angrenzenden Farbbereiche bzw. Graustufenbereiche berechnet. Die Regeln nach welcher die Überfüllungen berechnet werden, werden weiter unten näher erläutert.

Im Schritt S4 wird das Objekt in die Bitmap-Datei eingefügt, wobei das Objekt in Bildpunkte aufgerastert wird und die einzelnen Bildpunkte in die Bitmap-Datei eingesetzt werden.

Danach wird geprüft, ob ein weiteres Objekt vorhanden ist, das in die Bitmap-Datei einzufügen ist (Schritt S5). Falls ein weiteres Objekt vorhanden ist, geht der Verfahrensablauf auf den Schritt S2 über. Ansonsten endet das Verfahren mit dem Schritt S6. Mit dem vorliegenden Verfahren werden somit die Objekte einzeln in die Bitmap-Datei überführt. Hierbei werden die Überfüllungen anhand des Objektes in Bezug auf die Helligkeit der an das Objekt angrenzenden Farbbereiche der Bitmap-Datei berechnet. Dies hat den Vorteil, dass ohne das Anfertigen von zusätzlichen Tabellen oder Listen von den Formen der Objekte die vollständigen Informationen der Objekte zur Verfügung stehen. Da die Überfüllungen beim Ausstanzen oder Rastern in der Bitmap-Datei erzeugt werden, ist es nicht notwendig, für die Überfüllungen zusätzliche Objekte auf Objekt-Ebene zu erzeugen. Das Ermitteln der Überfüllungen anhand der einzelnen Objekte bezüglich der Bitmap-Datei und das Einfügen der Überfüllungen in der Bitmap-Datei kann somit ohne Verzögerung des Druckvorganges im Druckdatencontroller 17 des Druckgerätes 13 ausgeführt werden.

Das Einfügen eines Objektes in die Bitmap-Datei (Schritt S4) ist in dem in Figur 5 gezeigten Flussdiagramm dargestellt. Dieser Verfahrensablauf beginnt mit dem Schritt S7. Im Schritt S8 wird in der Bitmap-Datei ein Bereich zum Einfügen des jeweiligen Objektes ausgeschnitten bzw. ausgestanzt. Hierbei sind Überfüllungen zu berücksichtigen, die in den Bereich des Objektes ragen. Derartige Überfüllungen treten z.B. dann auf, wenn das einzufügende Objekt dunkler als der angrenzende Farbbereich der Bitmap-Datei ist. Das Ausschneiden kann auch in bestimmten Anwendungen (z.B. Overprint) weggelassen werden.

Im nachfolgenden Schritt wird das Objekt in die Bitmap-Datei hineingerastert, wobei hier Überfüllungen zu berücksichtigen sind, die das Objekt in die angrenzenden Bereiche der Bitmap-Datei erstrecken. Dies ist z.B. der Fall, wenn das Objekt heller als die angrenzenden Bereiche der Bitmap-Datei sind.

Mit Schritt S10 wird dieser Verfahrensablauf beendet.

**Trapping-Regeln**

Bei dem vorliegenden Verfahren kann zur Entscheidung, welcher Colorant beziehungsweise welche Farbe heller ist, die neutrale Dichte des jeweiligen Coloranten beziehungsweise der jeweiligen Farbe verwendet werden. Die neutrale Dichte ND ist in dem CMYK-Farbraum für einen Coloranten durch folgende Formel definiert:

$$ND = -1{,}7 \cdot \log(1 - c \cdot (1 - 10^{-0{,}6d})),$$

wobei d die spezifische neutrale Dichte des jeweiligen Coloranten ist, die meistens für Cyan 0,61, für Magenta 0,76, für gelb 0,16 und für schwarz 1,70 beträgt. c ist die Konzentration des Coloranten beziehungsweise des Farbmittels, mit welcher dieses auf dem Aufzeichnungsträger aufgebracht ist. Die Konzentration umfasst einen Wertebereich von 0 bis 1. c wird auch als Deckungsgrad bezeichnet

Die neutrale Dichte ND für eine Farbe ergibt sich aus der Summe der neutralen Dichten der einzelnen Coloranten wie folgt:

$$ND = (ND_C + ND_M + ND_Y + ND_K)$$

Beim vorliegenden Verfahren werden drei Arten von Überfüllungen beziehungsweise Traps unterschieden: Ein SPREAD ist eine Überfüllung, bei der die hellere Farbe beziehungsweise der hellere Colorant in die dunklere Farbe beziehungsweise den dunkleren Coloranten ausgedehnt ist.

Ein CHOKE ist eine Überfüllung, bei der sich der dunklere Farbbereich innerhalb eines helleren Farbbereichs befindet, wobei der hellere Farbbereich im Bereich des dunkleren Farbbereiches ausgestanzt (knock-out) ist, damit der dunklere Farbbereich möglichst farbecht wiedergegeben wird. Die Überfüllung des CHOKEs wird hierbei ausgeführt, indem der ausgestanzte Bereich des helleren Farbbereichs verringert wird, womit der hellere Farbbereich wiederum in den dunkleren Farbbereich ausgedehnt wird.

Es gibt auch den Fall, dass in zwei angrenzenden Bereichen zwei unterschiedliche Farben bzw. zwei unterschiedliche Coloranten vorhanden sind, die trotz ihrer Farbunterschiede die gleiche neutrale Dichte aufweisen. Die hierbei verwendete Überfüllung nennt man CENTER beziehungsweise CENTER-TRAP und sie ist symmetrisch um die Grenzlinie zwischen den beiden angrenzenden Flächen angeordnet. Hierdurch wird die ursprüngliche Kontur beibehalten. Eine solch CENTER-Überfüllung wird jedoch nicht für schwarze oder undurchsichtige beziehungsweise opake Farben beziehungsweise opake Coloranten angewandt. Bei schwarzen und anderen opaken Farben werden die angrenzenden Farben beziehungsweise Coloranten immer unter die schwarze beziehungsweise die anderen opaken Farben ausgedehnt.

In Abhängigkeit vom jeweiligen Typ des Coloranten beziehungsweise Typ der Farbe werden unterschiedliche Trappingregeln angewandt. Bei durchscheinenden Farben, die im nachfolgenden auch als "normale Farben" bezeichnet werden, werden alle Trappingregeln angewandt. Dies trifft auch für die üblicherweise verwendeten Prozessfarben Cyan, Magenta und Gelb zu, die durchscheinend (transluzent) sind.

Transparente Farben, insbesondere durchsichtige Lacke, werden grundsätzlich nicht getrappt.

Undurchsichtige Farben werden wie Schwarz behandelt, das heißt, dass die gleichen Trappingregeln wie für Schwarz angewandt werden, gemäß welcher die angrenzenden Coloranten und Farben unter die opake Farbe ausgedehnt werden.

Spezielle Spot-Farben, wie zum Beispiel Gold oder Silber, die außerhalb des Gamuts des verwendeten Farbraums liegen, werden beim Trapping ignoriert. Spot-Farben werden auch als Highlight Color Farben bezeichnet.

In einer Bilddatendatei gibt es viele Objekte, die aneinander angrenzen. Damit nicht zu viele Überfüllungen erzeugt werden, die in ihrer Gesamtheit das Bild negativ beeinflussen können, wird die Differenz der neutralen Dichte angrenzender Bereiche berechnet. Nur wenn der Differenzbetrag über einem vorbestimmten Betrag liegt, wird eine Überfüllung erzeugt. Diese Schwelle liegt typischerweise im Bereich von 0 bis 50% und vorzugsweise im Bereich von 5% bis 40% des Deckungsgrades, mit dem der Colorant auf dem Aufzeichnungsträger aufgetragen ist. Im Rahmen der Erfindung ist es auch möglich, anstelle der neutralen Dichte einen Schwellenwert anhand des Unterschiedes des Deckungsgrades oder der Luminanz der benachbarten Farbflächen zu verwenden. Bei Mehrfarbendruck wird dieser Schwellenwert für jeden einzelnen Coloranten angewandt.

Grundsätzlich gilt, dass je größer der Schwellenwert ist, desto weniger Überfüllungen erzeugt werden. In der Praxis hat sich deshalb ein Schwellenwert von mindestens 20% bis 50% sehr bewährt.

Einzelne bestimmte Objekte werden mit unterschiedlichen Trapping-Regeln behandelt.

Graphische Objekte sind mittels Vektoren definierte Objekte, die meistens mit einer monochromen Farbe gefüllt sind. Bei zwei derartig angrenzenden Objekten ist es einfach zu entscheiden, ob eine Überfüllung oder keine Überfüllung auszuführen ist. Schwieriger ist es, wenn die grafischen Objekte in einem Farbverlauf ausgebildet sind. Dies wird unten näher erläutert.

Buchstaben-Objekte werden grundsätzlich wie grafische Objekte behandelt. Jedoch können bei kleinen Buchstaben-Objekten, deren Strichbreite unter einer vorbestimmten Grenzbreite liegt, beim Trapping Probleme auftreten, wodurch das Trapping die Lesbarkeit der Buchstaben verschlechtert. Daher wird die Breite des Buchstaben-Objektes mit der maximalen Überfüllungsbreite verglichen. Falls die Breite des Buchstaben-Objektes kleiner als die doppelte maximale Überfüllungsbreite ist, wird die Überfüllungsbreite um einen bestimmten Betrag, beispielsweise um 50% vermindert. Falls die Breite des Objektes immer noch kleiner als die doppelte reduzierte maximale Überfüllungsbreite ist, wird kein Trapping ausgeführt, sondern die Buchstaben-Objekte werden als Überdruck (overprint) gedruckt, das heißt, sie werden auf die Hintergrundfarbe gedruckt, ohne dass die Hintergrundfarbe im Bereich der Buchstaben-Objekte ausgestanzt wird. Es wird somit kein knock-out (Ausnehmung) ausgeführt.

Schwarze Objekte werden wie undurchsichtige Objekte behandelt, so dass alle anderen Farben oder Coloranten unter diese Objekte ausgedehnt werden. Als schwarze Objekte werden alle Objekte behandelt, deren neutrale Dichte über einem bestimmten Schwellenwert liegt. Dieser Schwellenwert liegt im Bereich von 70% bis 100% der neutralen Dichte von Schwarz. Vorzugsweise liegt er im Bereich von 85% bis 95% der neutralen Dichte von Schwarz. Highlight-Colour-fFarben können grundsätzlich als schwarz angesehen werden.

Vom Offsetdruck ist es bekannt, ein "Superblack" zu erzeugen. Bei elektrofotografischen Druckern, die mit Tonerpartikeln drucken, kann es zweckmäßig sein, um ein intensives Schwarz zu erhalten, unter das Schwarz andere Farben zur Erhöhung von dessen Farbdichte zu drucken. Diese anderen Farben werden als Support-Farben bezeichnet. Damit eine Fehlregistrierung hier nicht sichtbar wird, werden diese Support-Farben, die unter den schwarzen Coloranten gedruckt werden, umgekehrt getrappt, das heißt, sie werden am Randbereich ein Stück eingezogen. Hierdurch wird sicher verhindert, dass bei einer Fehlpositionierung die Support-Farben vollständig vom schwarzen Coloranten abgedeckt sind.

Highlight-Colour-Objekte sind Objekte, die aus einem einzigen bestimmten Coloranten bestehen. Die Highlight-Farbe erzeugt in der Regel einen Farbeindruck, der einem Gemisch mehrerer Coloranten entspricht und oftmals außerhalb des Gamuts liegt, der mit den Prozesscoloranten erreicht werden kann. Die Highlight Color Farbe wird nicht mit anderen Prozeßfarben gemischt.

Da der Deckungsgrad der Highlight Color Farbe nicht mit dem Deckungsgrad einer aus mehreren Prozessfarben zusammengesetzten Farbe verglichen werden kann, wird bei Berechnung des Trapping-Schwellwerts nicht der Deckungsgrad sondern die neutrale Dichte des Objektes verwendet.

Bild-Objekte selbst werden in der Regel keinem Trapping-Verfahren unterzogen. Bildobjekte werden an ihren Rändern gegen angrenzende weitere Objekte getrappt. Hier gibt es grundsätzlich vier unterschiedliche Möglichkeiten: Beim Center-Trapping werden sowohl das Bild als auch das angrenzende Vektorobjekt ausgedehnt. Beim neutralen Trapping wird jeder Bildpunkt mit der neutralen Dichte des angrenzenden Vektorobjektes verglichen und die Überfüllung wird bildpunktweise zur einen oder zur anderen Seite ausgeführt. Dies kann jedoch einen diffusen Kanteneindruck ergeben, was nicht erwünscht ist.

Bei dunklen Bildern wird ein Choke-Bild-Trapping ausgeführt, das heißt, dass das angrenzende Vektorobjekt unter das Bild ausgedehnt wird. Bei hellen Bildern hingegen wird ein Spread-Bild-Trapping ausgeführt, das heißt, dass das Bild über den Objektbereich ausgedehnt wird.

Die bevorzugte Trapping-Regel für Bild-Objekte ist das Center-Trapping, das auch als Standardregel (DEFAULT) vorgegeben ist. Graustufenbilder werden wie Farbbilder behandelt. Zwischen angrenzenden Bild-Objekten wird kein Trapping ausgeführt.

Da beim vorliegenden Verfahren das Trapping vollautomatisch ausgeführt wird, sind gewisse Trapping-Parameter vorzugeben. Diese Trapping-Parameter können im Drucksystem gespeicherte Vorgabe-Werte (Default-Werte) sein oder auch individuell dem Druckdokument hinzugefügte Trapping-Parameter sein. Vorzugsweise ist ein Satz vollständiger Trapping-Parameter im Druckgerät 13 bzw. in dessen Druckdatencontroller 17 gespeichert, so dass Druckdaten alleine mit der Trapping-Anweisung, dass ein Trapping ausgeführt werden soll, im Drucksystem getrappt werden können. Dieser vollständige Satz von Trapping-Parametern (Vorgabe-Werte) kann durch individuelle mit dem Druckdatenstrom übermittelte Trapping-Parameter überschrieben bzw. ersetzt werden oder diese Vorgabe-Werte können auch die weiter unten erläuterten Ressourcen ersetzt werden, die auch im Drucksystem abgespeichert werden können.

Vorzugsweise werden beim vorliegenden Verfahren zwei unterschiedliche Sätze von Trapping-Parametern verwendet, wobei der eine Satz von Trapping-Parametern das Trapping parallel zur Förderrichtung des Aufzeichnungsträgers im Drucker steuert und der andere Satz von Trapping-Parametern das Trapping quer zur Förderrichtung des Aufzeichnungsträgers in der Druckvorrichtung steuert.

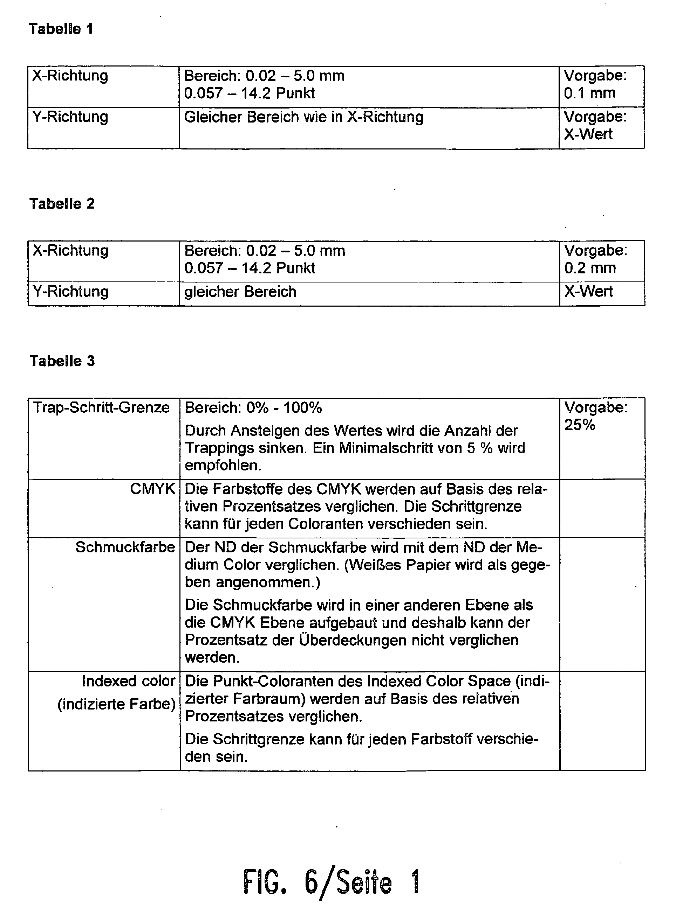

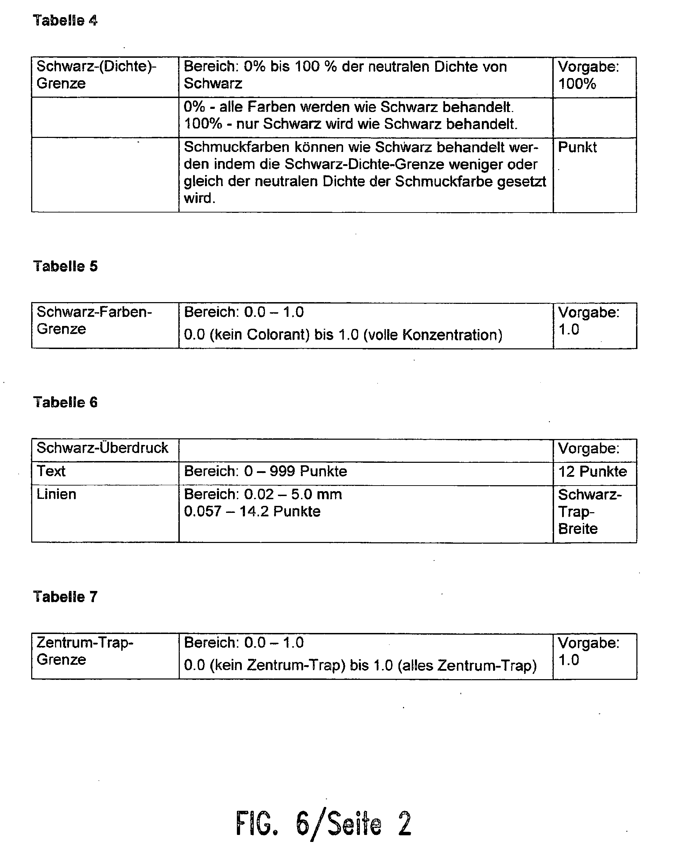

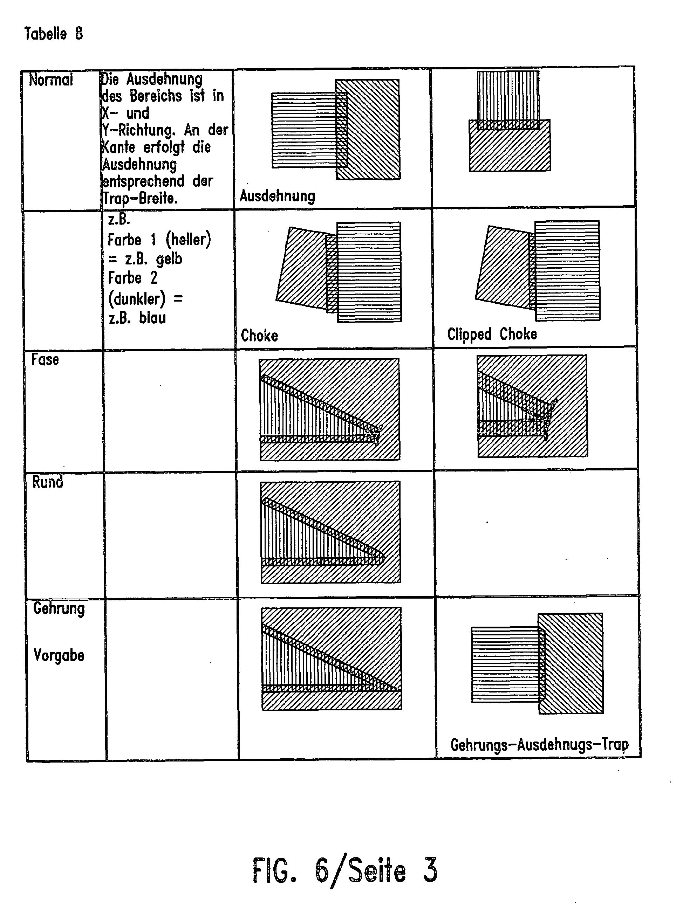

Die einzelnen Trapping-Parameter werden nachfolgend anhand der in Figur 6 gezeigten Tabellen erläutert.

Die Breite der Überfüllung (Trap) wird vorzugsweise fest vorgegeben. Dies vereinfacht die Erzeugung von Überfüllungen wesentlich, da lediglich bestimmt werden muss, ob eine Überfüllung erzeugt werden soll und an welcher Seite der Grenzfläche zwischen zwei angrenzenden Objekten sie vorgesehen werden soll oder ob sie zentriert um die Grenzlinie angeordnet werden soll. Die Breite der Überfüllung beträgt in der Regel ein oder zwei Bildpunkte. Bei einer Auflösung von 600 dpi entsprechen zwei Bildpunkte etwa 1,5 mm. Zu Testzwecken kann es zweckmäßig sein, die Breite der Überfüllung auf einige Millimeter zu setzen, da hierdurch die Überfüllungen am Druckbild sofort erkennbar sind.

Für nicht-schwarze Coloranten beträgt die Breite der Überfüllungen in der Regel 0,02 bis 5,0 mm, wobei für die X-und Y-Richtung die gleichen Werte verwendet werden können (Tabelle 1) .

Die Breite der Überfüllungen für schwarze oder opake Coloranten ist in der Regel zweimal so groß wie die Breite der Überfüllungen für nicht-schwarze Coloranten (Tabelle 2).

Werden Druckdaten skaliert, d.h. in einen größeren oder kleineren Maßstab übergeführt, dann werden die Überfüllungen mit unveränderter Breite beibehalten. Ein Skalieren der Breite der Überfüllungen ist nicht zweckmäßig.

Als X-Richtung bei der Bestimmung der Breite der Überfüllung wird jede Richtung einer normalen auf der Grenzlinie zwischen zwei Farbflächen angesehen, die entweder vertikal verläuft oder im Bereich zwischen einer Vertikalen und einer um 45° gegenüber der Vertikalen geneigten Linie verläuft. Die Breite der Überfüllung wird dann von der Grenzlinie in Richtung der Vertikalen und nicht in Richtung der Normalen zur Grenzlinie eingestellt. In entsprechender Weise gilt als Y-Richtung einer auf einer Grenzlinie stehenden Normalen jede Richtung zwischen einer Horizontalen und einer gegenüber der Horizontalen um 45° geneigten Linie bzw. eine horizontal verlaufende Normale. Die Breite der Traps wird auch hier nicht in Richtung der Normalen zur Grenzlinie, sondern in Richtung der Horizontalen (Y-Richtung) eingestellt.

In der Praxis bedeutet dies, dass die Überfüllung entweder ein oder zwei Bildpunkte in Richtung der Vertikalen (X-Richtung) oder in Richtung der Horizontalen (Y-Richtung) beträgt. Deshalb sind keine aufwendigen Berechnungen der Breite der Überfüllungen notwendig und die Überfüllungen lassen sich ohne großen Rechenaufwand in die Bitmap-Datei eintragen. Dies vereinfacht das Trapping-Verfahren on the Fly im Druckgerät.

Tabelle 3 gibt die Regeln für den Differenzbetrag zum Beurteilen der Helligkeiten zweier benachbarter Bereiche an. Wenn die Differenz der Helligkeiten zweier angrenzender Bereiche geringer als der Differenzbetrag ist, werden keine Überfüllungen erzeugt. Im Mehrfarbraum (CMYK) wird jeder Colorant des Objektes verglichen. Der hellere Colorant wird mit dem jeweiligen Deckungsgrad multipliziert und um den prozentualen Differenzbetrag erhöht und falls der somit erhöhte hellere Colorant dunkler als der mit seinem Deckungsgrad multiplizierte dunklere Colorant ist, dann ist kein Trapping notwendig. Dieser Vergleich wird zwischen allen Coloranten der angrenzenden Bereiche ausgeführt. Wenn ein Vergleich die Notwendigkeit eines Trappings ergibt, so wird ein Trapping ausgeführt.

Farben mit einer neutralen Dichte oberhalb einer vorbestimmten Dichte-Grenze (black density limit) werden wie Schwarz behandelt. Der Vorgabewert liegt bei 100% .

(Tabelle 4). Es kann jedoch auch in manchen Fällen zweckmäßig sein, die Dichte-Grenze abzusenken, z.B. auf einen Bereich von 80% bis 95%.

Die Tabelle 5 zeigt die Schwarz-Farben-Grenze, die angibt, ab welchen Deckungsgrad die Farbe Schwarz als schwarz und nicht als grauer Farbton zu beurteilen ist. Der Vorgabewert liegt bei 1,0. Es sind jedoch auch Werte zwischen 0,85 und 1, insbesondere zwischen 0,85 und 0,95 sinnvoll.

Kleine schwarze Objekte wie Buchstaben oder Linien werden oftmals besser auf andere Objekte gedruckt, ohne dass deren Bereich ausgestanzt wird. Dieses Überdrucken (overprint) benötigt wesentlich weniger Rechenleistung als ein Ausstanzen und Erzeugen einer Überfüllung. Ein Überdrucken wird normalerweise gemacht, wenn der Text kleiner als eine vorbestimmte Größe (12pt) ist oder Linien kleiner als die Breite der Überfüllung für schwarze Farbe sind. In Tabelle 6 sind die entsprechenden Bereiche der Grenzwerte angegeben.

Eine Center-Trap wird normalerweise nur erzeugt, wenn die neutrale Dichte der beiden angrenzenden Bereiche die gleiche ist. Mit einer Center-Trap-Grenze kann der Bereich, innerhalb dem eine Center-Trap erzeugt wird, erweitert werden. Die Center-Trap-Grenze umfasst den Bereich von 0,0 bis 1,0 (Tabelle 7). Die Center-Trap-Grenze wird angewendet, in dem die neutrale Dichte der dunkleren Farbe mit der Center-Trap-Grenze multipliziert wird und falls das Produkt kleiner als die neutrale Dichte der helleren Farbe ist, dann wird eine Center-Trap erzeugt.

Die Tabelle 8 zeigt einige Formen der Überfüllungen, normale Überfüllungen für Spread und Choke, die am Randbereich auch geclipped, d.h. dass die Überfüllung, die sich in den angrenzenden Farbbereich hinein erstreckt am Rand nicht über diesen angrenzenden Farbbereich hinaus steht. Es sind auch Überfüllungen mit Fase (bevel), einer Rundung (round) und Gehrung (miter) dargestellt.

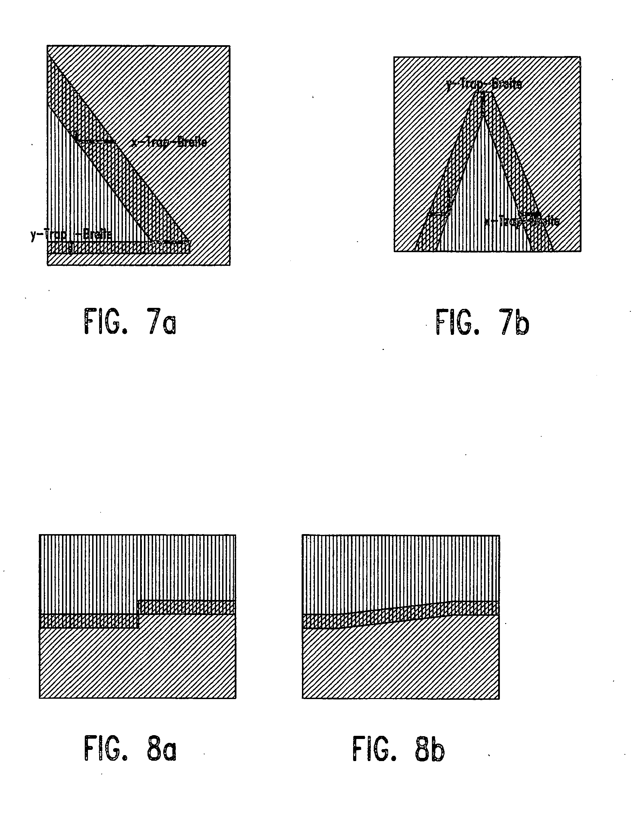

Bei Gehrungen besteht das Problem, dass bei kleinen Winkeln eine Überfüllung mit einer sehr schmalen, langen Spitze entsteht. Es wird vorgeschlagen eine Gehrungsüberfüllung abzuschneiden, wenn sie sich im Bereich der Spitze über die jeweilige Breite der Überfüllung in X-Richtung oder in Y-Richtung erstreckt. Dies ist in Figur 7a und 7b anhand zweier Beispiele gezeigt. Diese Begrenzung der Gehrungsspitze verursacht fast keinen Rechenaufwand, sie ist unabhängig von der Orientierung des Gehrungswinkels. Sie lässt sich sehr schnell ermitteln und verzögert nicht die Berechnung der Überfüllungen. Das Verfahren ist damit ohne großen Rechenaufwand schnell und resourcensparend ausführbar.

Wenn zwei Bereiche aneinander angrenzen, deren Helligkeiten sich graduell verändern, so kann es sein, dass an einer Grenzlinie an einem Abschnitt die eine Grenzfläche und am anderen Abschnitt die andere Grenzfläche heller gegenüber der jeweils anderen Grenzfläche ist. Dies führt dazu, dass die Überfüllung an dem einen Abschnitt sich in den einen Bereich und dem anderen Abschnitt sich in den anderen Bereich erstreckt. Dieser Wechsel kann sprunghaft ausgeführt werden oder es kann auch ein allmählicher Übergang erfolgen. Zur Einstellung dieses Überganges wird eine Gleit-Trap-Grenze (Sliding-Trap-Limit) vorgesehen, die einen Zahlenbereich von 0,0 bis 1,0 umfasst. Ist der Wert der Gleit-Trap-Grenze 1,0 so erfolgt der Übergang zwischen den beiden Überfüllungen sprunghaft (Fig. 8a). Bei kleineren Werten der Gleit-Trap-Grenze verschiebt sich die Überfüllung allmählich über die Grenzlinie der angrenzenden Farbbereiche. Figur 8b zeigt einen allmählichen Übergang für eine Gleit-Trap-Grenze von etwa 0,5.

Zur Verminderung der Sichtbarkeit einer Überfüllung kann diese skaliert werden (Trap-Colour-Scaling). Im Bereich der Überfüllung wird der Deckungsgrad durch einen Skalierungsfaktor reduziert. Der Skalierungsfaktor kann Werte im Zahlenbereich von 0,0 bis 1,0 annehmen. Es ist auch möglich, dass für unterschiedliche Coloranten unterschiedliche Skalierungsfaktoren vorgesehen sind. Der Vorgabewert der Skalierungsfaktoren ist 1,0.

Ein Skalierungsfaktor von 1,0 bedeutet, dass die Überfüllung immer den Deckungsgrad des dunkleren Coloranten, wohingegen ein Skalierungsfaktor von 0,0 bedeutet, dass die Überfüllung immer den Deckungsgrad des helleren Coloranten aufweist. Dieser Skalierungsfaktor wird auf die Differenz des Deckungsgrades des dunkleren und helleren Coloranten angewandt und zum Deckungsgrad des helleren Coloranten hinzu addiert. Hiermit kann verhindert werden, dass die Überfüllungen zu dunkel oder zu hell werden.

## Implementierung des Verfahrens zum Trapping von Druckdaten in einen AFP-/IPDS-Datenstrom

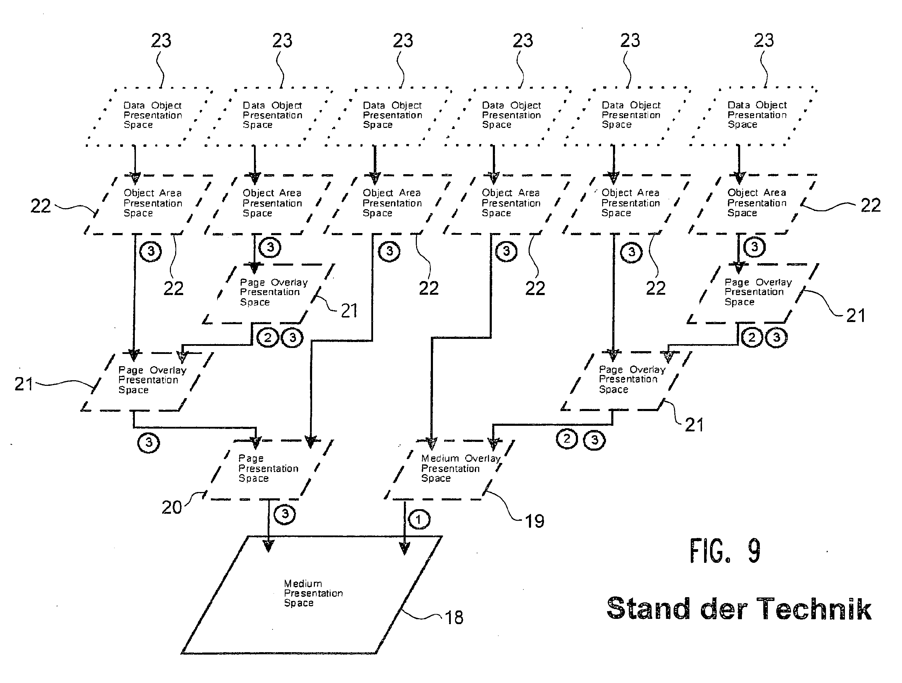

In der IBM-Publikation "Intelligent Printer Data Stream, Reference" S544-3417-06, 7. Ausgabe (November 2002) ist der IPDS-Druckdatenstrom im Detail erläutert. In dieser Veröffentlichung ist auf Seite 31 ein Diagramm aufgeführt, das anliegend als Figur 9 gezeigt ist. Dieses Diagramm zeigt ein Beispiel der hierarchischen Struktur eines IPDS-Druckdatenstromes mit mehreren sogenannten Presentation Spaces. Diese Presentation Spaces definieren jeweils einen bestimmten Bereich im zu druckenden Dokument. Es können mehrere Presentation Spaces einander überlagert werden.

Die höchste Ebene in der Hierarchie der Presentation Spaces bildet ein Medium Presentation Space 18 der den Druckdatenträger bzw. das Druckmedium definiert. Dieser Medium Presentation Space ist ein begrenzter Adressraum im Druckdatenstrom, der auf eine vollständige Seite des Druckdatenträgers abgebildet wird. Auf einer Seite eines Druckdatenmediums gibt es somit nur einen einzigen Medium Presentation Space 18. Die im Medium Presentation Space enthaltenen Druckanweisungen und Druckdaten gelten somit für die gesamte Seite.

Weiterhin gibt es einen Medium Overlay Presentation Space 19, einen Page Presentation Space 20, Page Overlay Presentation Space 21, Object Area Presentation Space 22 und Data Object Presentation Space 23.

Alle Presentation Spaces können Druckdaten und Druckanweisungen enthalten. Die niedrigste Ebene der Presentation Spaces stellen die Data Object Presentation Spaces 23 dar, in welchen die zu druckenden Datenobjekte (Grafiken und Texte) enthalten sind. Diese Data Object Presentation Spaces 23 werden mit dem Object Area Presentation Spaces 22 verknüpft (merged), die für spezielle Objekte vorgesehen sind. Die Object Area Presentation Spaces 22 werden wiederum mit Page Overlay Presentation Spaces 21 verknüpft. Overlays können grundsätzlich aus jeder beliebigen Kombination aus Text, Bildgrafik, Barcode und sogenannten Objektcontainerdaten bestehen. Overlays werden in der Regel als eine Art Formular verwendet, in welche die Datenobjekte der niedrigeren Ebenen eingefügt werden.

Die Reihenfolge, in der die einzelnen Presentation Spaces miteinander verknüpft werden, ist exakt festgelegt.

Grundsätzlich haben Trapping-Anweisungen einer niedrigeren Ebene Priorität vor Trapping-Anweisungen gegenüber einer höheren Ebene, da die Druckanweisungen in einer niedrigeren Ebene in einer direkteren Beziehung zum jeweiligen Objekt stehen.

In der höchsten Ebene, dem Medium Overlay Presentation Space 19, ist eine Trapping-Anweisung "global Trapping enabling/disabling information" vorgesehen, mit welcher das Trapping des Druckdatenstromes generell ein- und ausgeschaltet werden kann. Diese Trapping-Anweisung bricht die oben erläuterte Vorrangs-Regelung, gemäß der Trapping-Anweisungen niedrigerer Ebenen Priorität vor Trapping-Anweisungen höherer Ebenen haben. Sie erlaubt es einen Operator des Drucksystems auf einfache Art und Weise das Trapping grundsätzlich ein- oder auszuschalten, indem lediglich in der obersten Ebene diese Trapping-Anweisung eingefügt wird.

Die Trapping-Anweisungen können in jedem Presentation Space separat mit einem Trapping-Triplet definiert werden, die weiter unten näher erläutert werden. Hierdurch können die Trapping-Einstellungen in den einzelnen Presentation Spaces individuell geregelt werden. Grundsätzlich gilt hier auch, dass die Trapping-Anweisungen eines Presentation Spaces einer niedrigeren Ebene eine entsprechende Trapping-Anweisung eines Presentation Spaces einer höheren Ebene überschreiben (overrule) kann. Hierdurch kann abweichend von der üblichen Praxis des IPDS-Datenstromes in den niedrigeren Ebenen, z.B. den Data Object Presentation Spaces, das Trapping gesteuert werden und diese Trapping-Anweisung nicht von in höheren Ebenen vorgesehenen Presentation Spaces abgeändert werden. Hierdurch kann ein Benutzer, der ein zu druckendes Datenobjekt erzeugt, eindeutig und unwiderruflich festlegen, ob und wie dieses Datenobjekt dem Trapping-Verfahren unterzogen wird. Es gibt Datenobjekte in Druckdaten, die generell niemals einem Trapping-Verfahren unterzogen werden dürfen. Derartige Datenobjekte sind z.B. Barcodes. Würden Barcodes einem Trapping-Verfahren unterzogen werden, dann würde die Strichbreite der einzelnen Barcodes verändert werden, wodurch die Bedeutung der Barcodes verloren geht. Selbst wenn auf in höheren Ebenen angeordnete Presentation Spaces ein Trapping vorgesehen sein sollte, werden Datenobjekte, bei welchen auf der Ebene der Data-Object Presentation Spaces das Trapping-Verfahren angeschaltet ist, nicht einem Trapping-Verfahren unterzogen.

Im Druckdatenstrom müssen nicht alle Trapping-Parameter definiert sein. Im Druckdatenstrom nicht definierte Trapping-Parameter werden durch in die im Druckgerät 13 bzw. in dem Druckdatencontroller 17 gespeicherte Vorgabewerte (default values) ergänzt. In der Praxis ist es zweckmäßig, möglichst wenig Trapping-Parameter im Druckdatenstrom festzulegen, da das Trapping-Verfahren sehr druckerspezifisch ist. Denn der Versatz der einzelnen Farbauszüge auf einem Druckdatenträger hängt in der Regel von den mechanischen Eigenschaften des Druckgerätes ab, so dass grundsätzliche Trapping-Parameter, wie z.B. die Breite einer Überfüllung, am Besten im Druckgerät 13 festgelegt werden. Lediglich Trapping-Parameter, die für die Druckdaten selbst spezifisch sind, wie z.B. das Ausschalten des Trapping-Verfahrens für Barcode-Objekte, sollten im Druckdatenstrom definiert werden.

Das Prinzip des Ergänzens der Trapping-Parameter durch Vorgabewerte im Druckgerät erlaubt es, die Erstellung des Druckdatenstroms einfach zu halten, da im Druckdatenstrom lediglich wenige, grundsätzliche und allgemeine Trapping-Parameter definiert werden, die im Druckgerät durch weitere spezifische Trapping-Parameter ergänzt werden.

Erfindungsgemäß wird für die Steuerung des Trapping-Verfahrens die Resourcenstruktur des AFP-Datenstroms und des IPDS-Datenstroms verwendet. Am Anwendercomputer 9 (Figur 3) werden Druckdaten erzeugt und mittels des AFP-Datenstroms einem Druckserver 11 übermittelt. Im Druckserver 11 wird der AFP-Datenstrom aufbereitet und in einen IPDS-Datenstrom zur Ausgabe an das Druckgerät 13 umgewandelt. Im Druckserver 11 laufen dazu mehrere Prozesse ab, die durch Softwaremodule gesteuert sind. Ein erstes Softwaremodul bindet Ressourcendaten, wie z.B. Fonts oder Overlays, die im originären Druckdatenstrom aufgerufen werden, in diesen ein. Ein zweites Softwaremodul, das Parsing-Modul überprüft den Druckdatenstrom auf Konsistenz mit vorgegebenen Regeln. Dem Parsing-Vorgang vorgeschaltet ist ein Pre-Parsing-Vorgang, der von einem entsprechenden Software-Modul durchgeführt wird, bei dem jedem Resourcenaufruf und der zugeordneten Resourcendatei zusätzlich zum Resourcenname ein Identifizierungsdatum zugeordnet wird, durch das die Resource gegenüber allen anderen Resourcen des Dokumentendatenstroms eindeutig gekennzeichnet ist. Innerhalb des Dokumentendatenstroms kann die Resource dann mittels des Resourcennamens und/oder des Identifizierungsdatums einmal oder mehrfach zur Darstellung der Druckdaten und der Resourcendaten auf dem Druckgerät 13 aufgerufen werden. Die hier im Druckserver dargestellten Prozesse können auch teilweise oder vollständig im Druckdatencontroller 17 des Druckgerätes 13 durchgeführt werden.

Im gezeigten Ausführungsbeispiel enthält der AFP-Dokumentendatenstrom Dokumente, die dem MO:DCA-Standard entsprechen und der jeweils Referenzdaten zu Datenobjekten enthält, die durch den Druckserver 11 und im Druckdatencontroller 17 verfügbar sind. Die Resourcendaten können dabei vom Anwendercomputer 9 an den Druckserver 11 und den Druckdatencontroller 17 getrennt von dem MO:DCA-Dokumentendatenstrom übertragen werden oder bereits im Druckserver 11 und im Druckdatencontroller 17 als externe Resourcen gespeichert sein. Die Resourcendaten können aber auch zusammen mit dem Dokumentendatenstrom vom Anwendercomputer 9 an den Druckserver 11 als eingebettete Resourcendaten übertragen werden (sogenannte Inline Resourcen). Weitere Details einer entsprechenden Datenverarbeitung sind in der WO-A1-2004/0008379 beschrieben.

Die Resourcendaten können sogenannte Datenobjektresourcen enthalten, die Objektdaten beinhalten, welche insbesondere mehrfach in identischer Weise im Dokumentendatenstrom referenziert werden. Derartige Datenobjekte können z.B. Bilddaten, Textdaten, Grafikdaten und/oder Trappingdaten enthalten. Die Bezugnahme auf die Objektresourcen kann über eine Objektresourcenbibliothek erfolgen, die charakterisierende Daten zu dem Objekt enthält sowie Daten über dem Speicherort der entsprechenden Objektdaten. Die Library umfasst eine Datenobjektresource-Zugangstabelle (Data Object Resource Access Table RAT), die für den Druckserver 11 als Indextabelle für den Zugriff des Druckservers auf die Resourcendaten wirkt.

Der Druckserver 11 empfängt den MO:DCA-Dokumentendatenstrom vom Anwendercomputer 9, konvertiert ihn in einen IPDS-Dokumentendatenstrom und sendet diesen an das Druckgerät 13. Im Zuge der Datenkonvertierung liest es aus dem MO:DCA-Dokumentendatenstrom die Referenzinformation (Name) eines Datenobjekts und greift mit Hilfe der Datenobjektresource-Zugriffstabelle (RAT) auf die gespeicherte Datenresource zu. Die vollständigen Daten des Objekts werden dann in den IPDS-Datenstrom integriert und an das Druckgerät 13 gesandt. Dieses Verfahren kann genauso gut angewandt werden, wenn die Daten statt an ein Druckgerät an ein anderes Ausgabegerät, z. B. an einen Farbbildschirm, gesandt werden.

Ein MO:DCA-Dokumentendatenstrom ist in Datenelemente strukturiert, die weitgehend selbsterklärend sind. Strukturierte Felder (structured field) sind wichtige Bestandteile der MO:DCA-Struktur. Ein strukturiertes Feld ist in mehrere Teile gegliedert. Ein erster Teil (introducer) identifiziert das gewünschte Kommando, gibt die vollständige Länge des Kommandos an und spezifiziert zusätzliche Kontrollinformation, z.B. ob zusätzliche auffüllende Bytes, sogenannte Padding-Bytes, vorhanden sind. Die in einem strukturierten Feld enthaltenen Daten können als Fixparameter codiert sein, Wiederholungsinformationen beinhalten (repeating groups), Stichworte (Keywords) und sogenannte Triplets. Die Fixparameter entfalten ihre Wirkung nur für die Struktur, in der sie enthalten sind. Wiederholungsgruppen spezifizieren eine Gruppierung von Parametern, die mehrmals auftreten können. Stichworte sind selbsterklärende Parameter, die typischerweise zwei Bytes umfassen, wobei das erste Byte ein Identifikationsbyte für das Stichwort ist und das zweite Byte ein für das Stichwort charakterisierender Datenwert. Triplets sind selbsterklärende Parameter, die in einem ersten Byte eine Längenangabe, in einem zweiten Byte eine für das Triplet charakterisierende Identifizierungsinformation und dann bis zu 252 Datenbytes enthalten. Die genannten Datenstrukturen eines MO:DCA-Dokumentendatenstroms definieren eine Syntax, die im Zuge eines Parsing-Vorgangs auswertbar ist und flexibel erweiterbar ist.

MO:DCA-Datenströme sind ähnlich hierarchisch gegliedert wie die oben erläuterten IPDS-Datenströme.

Die Resourcendaten können an unterschiedlichen Stellen, dem Anwendercomputer 9, dem Druckserver 11 und sogar mittels eines Bedienfeldes am Druckgerät 13 erzeugt werden. Diese Resourcendaten werden an den Druckdatencontroller 17 des Druckgerätes 13 einmal gesandt und dort vorgehalten, so dass sie immer wieder verwendet werden können, wenn sie ein entsprechender Druckdatenstrom referenziert.

Hierdurch besteht für einen Anwender des Anwendercomputers 9 oder Operator des Druckservers 11 die Möglichkeit, spezifische Trapping-Einstellungen einmal als Resourcedaten zu erstellen und am Druckdatencontroller 17 zu hinterlegen, die dann wiederholt aufgerufen werden.

Nachfolgend werden einige Trapping-Beispiele in einem IPDS-Druckdatenstrom erläutert:

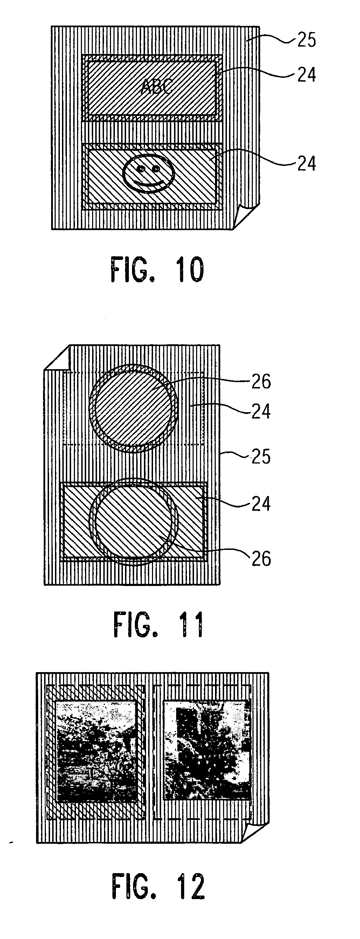

Figur 10 zeigt ein Beispiel in dem zwei Presentation Spaces 24 mit jeweils einer gleichmäßigen dunklen Hintergrundfarbe gefüllt sind und mit einem darunter liegenden Presentation Space 25 verknüpft sind, der mit einer helleren Farbe gefüllt ist. Hier sind am Rand der Presentation Spaces 24 Überfüllungen zu erzeugen, da hier Farbbereiche unterschiedlicher Helligkeit aneinander stoßen. Eine Trapping-Anweisung im Presentation Space 24 regelt die Art, wie das Trapping am Rand zum Presentation Space 25 ausgeführt wird.

In Figur 11 ist ein ähnliches Beispiel mit zwei Presentation Spaces 24 gezeigt, in denen jeweils ein kreisförmiges Element (Data Object Presentation Space 26) angeordnet ist. Der obere Presentation Space 24 ist transparent, d.h. mit keiner Hintergrundfarbe gefüllt. Dieser Presentation Space 24 enthält eine Anweisung, dass das Trapping von darin enthaltenen Objekten mit darunter liegenden Presentation Spaces durchzuführen ist.

Der untere Presentation Space 24 ist hingegen mit einer opaken Hintergrundfarbe gefüllt, so dass das kreisförmige Element 26 gegenüber dem Presentation Space 24 und nicht gegenüber dem darunter liegenden Presentation Space 25 zu trappen ist.

Es kann auch wünschenswert sein, unterschiedliche Trapping-Regeln für unterschiedliche Elemente innerhalb eines Presentation Space zu verwenden, beispielsweise für unterschiedliche Grafikelemente (GOCA), die gefüllte oder leere Ränder besitzen. Für solche Fälle sind "Trapping Drawing Orders" und "Trapping Text Controls" vorgesehen.

Bei in IOCA Presentation Spaces enthaltenen multilevel Bildern wird grundsätzlich kein Trapping ausgeführt, da sie als opake Objekte betrachtet werden. Ein Trapping findet hier lediglich an den Rändern des Bildes bzw. an den Rändern des IOCA Presentation Space statt, wenn dieser mit einer Hintergrundfarbe gefüllt ist (Figur 12).

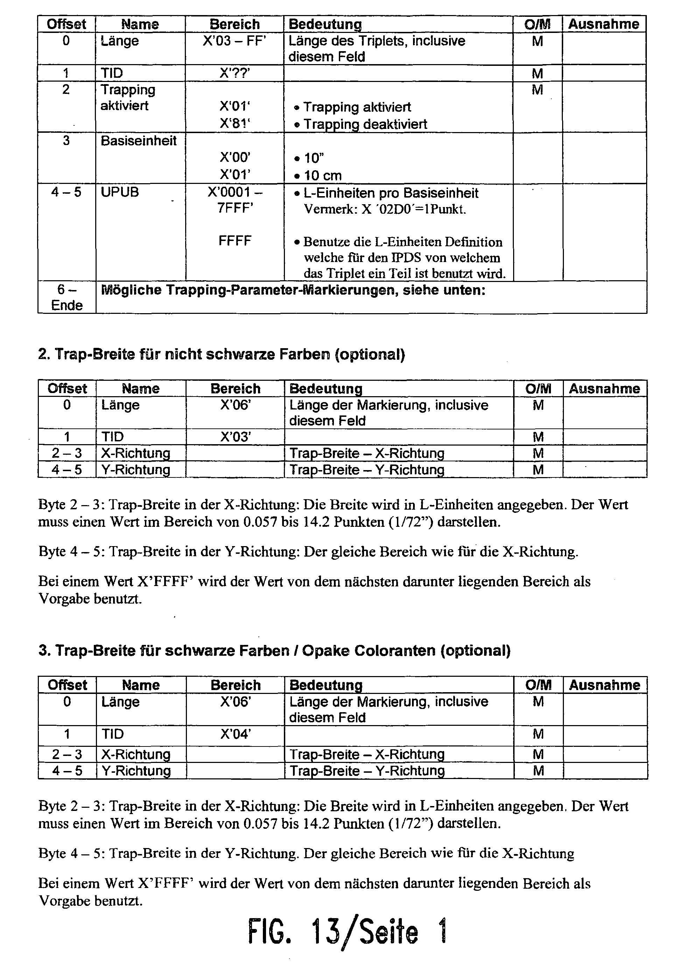

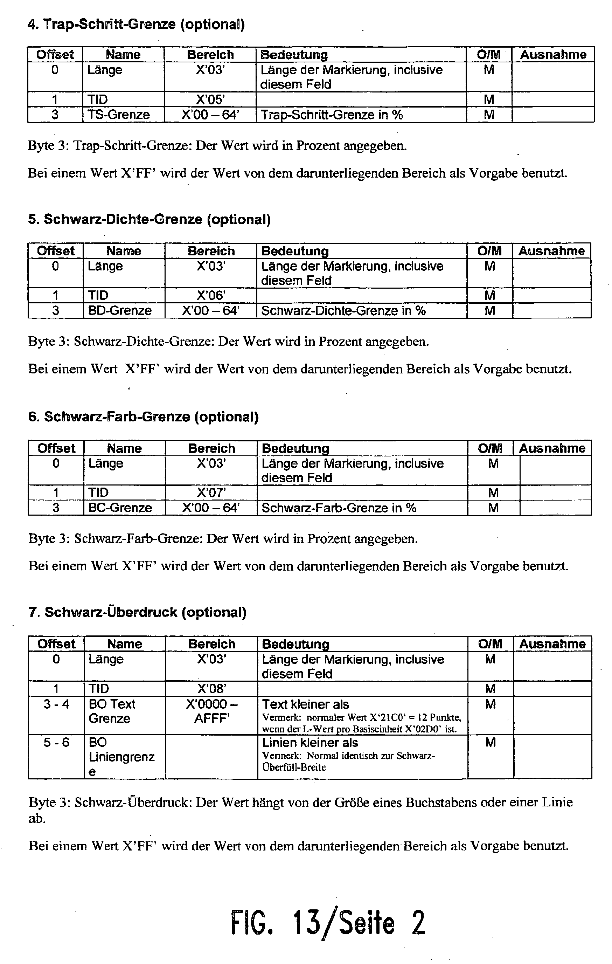

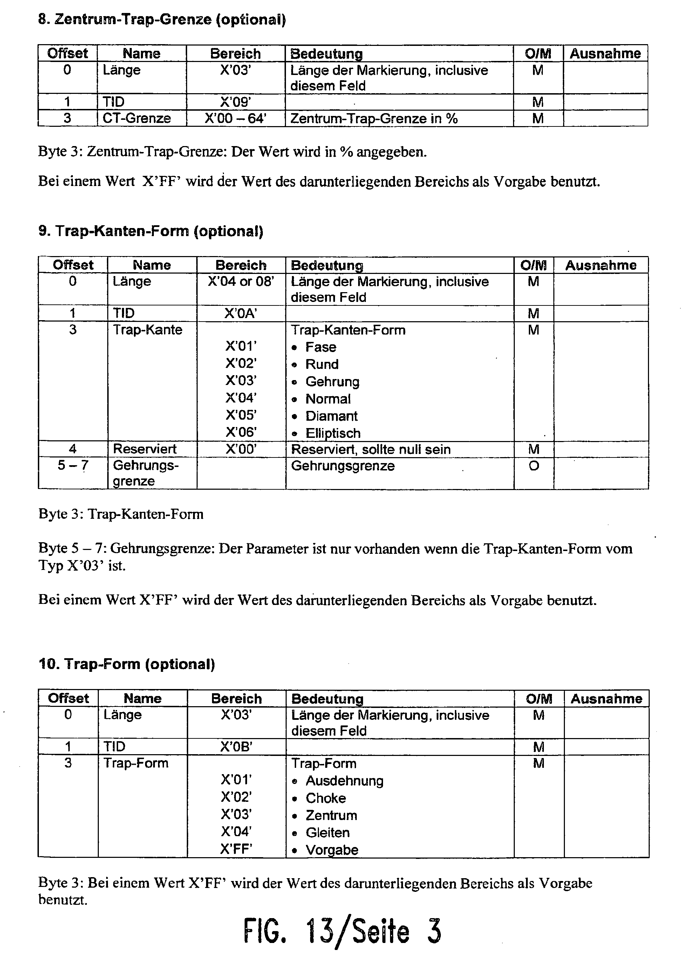

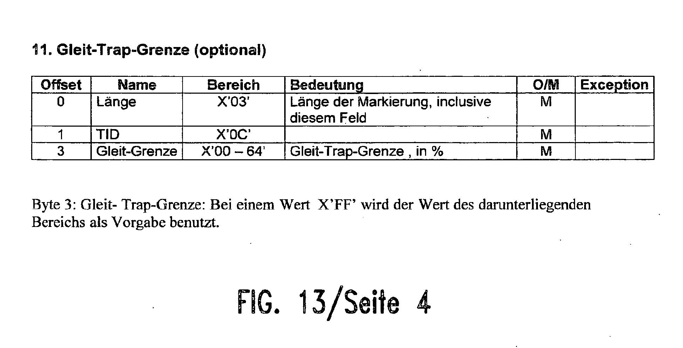

Figur 13 zeigt die AFP-/IPDS-Trapping-Parameter-Triplets in Tabellenform, wobei in den jeweils ersten drei Spalten das Triplet (Offset, Name, Bereich (=Range)) angegeben ist. In der vierten Spalte ist die Bedeutung des Triplets erläutert. In der fünften Spalte ist angegeben, ob die Triplets optional oder verpflichtend (mandatory) sind. In der sechsten Spalte sind Ausnahmen (exceptions) angegeben.

Das Trapping ist gewöhnlich von der Papierlaufrichtung abhängig. Die Trapping-Parameter in Papierlaufrichtung unterscheiden sich daher oft von denen quer zur Papierlaufrichtung. Bei den Trapping-Parameter-Triplets bedeutet die Y-Richtung immer parallel zur Papierlaufrichtung und die X-Richtung ist um 90° quer zur Papierlaufrichtung gedreht. Falls ein Objekt gedreht wird, wendet der Druckdatencontroller automatisch die Parameter der entsprechenden Richtung an.

Als Maßeinheit ist in einem IPDS-Datenstrom üblicherweise eine L-Einheit (L-Unit) definiert. Diese L-Einheit kann für die Trapping-Parameter abweichend definiert werden. In den Tabellen sind einige Abkürzungen aufgeführt. Sie bedeuten:

| | |
|---|---|
| TID | Trapping ID |
| UPUB | L-Units per UnitBase |
| TS Limit | Trap-Step-Limit (Differenzbetrag) |
| BD Limit | Black Density Limit (Dichtegrenze) |
| BC Limit | Black Color Limit (Schwarz-Farben-Grenze) |
| CT Limit | Center-Trap Limit (Center-Trap-Grenze) |
| TCS | Trap-Color-Scaling (Skalierungsfaktor) |

Das Trapping-Verfahren wird vor allem im Druckdatencontroller 17 (Figur 3)in Echtzeit ausgeführt, so dass die Druckdaten ohne Verzögerung im Druckvorgang zugeführt werden. Der Druckdatencontroller 17 muß nicht zwangsläufig in dem Druckgerät 13 integriert sein, sondern kann auch außerhalb des Druckgeräts 13 angeordnet sein, beispielsweise als separater Raster Image Prozessor (RIP). Der Druckdatencontroller 12 kann spezielle Hardware-Schaltungen umfassen, z.B. FPGAs (Free Programmable Gate Arrays) oder ASICs (Application Specific Integrated Circuits). Er kann auch auf einem üblichen Computer (Datenverarbeitungsgerät) wie z.B. einem Personal Computer mit einem oder mehreren Intel® Pentium Prozessoren oder einem anderen Prozessorsystem mit geeignetem Betriebssystem betrieben werden. Er kann weiterhin mit einem Mikroprozessor versehen sein, in dem ein ausführbares Computerprogramm gespeichert ist, das zum Ausführen des erfindungsgemäßen Verfahrens ausgebildet ist. Dieses Computerprogramm kann selbstverständlich auch auf einem vom Drucksystem unabhängigen Datenträger gespeichert werden.

Die Erfindung ist insbesondere dazu geeignet, als Computerprogramm (Software) realisiert zu werden. Sie kann damit als Computerprogramm-Modul als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

Bezugszeichenliste

| | |
|---|---|
| 1 | Rechteck |
| 2 | Balken |
| 3 | Objekt |
| 4 | ausgestanzter Bereich |
| 5 | Trapping-Bereich |
| 6 | Kreis |
| 7 | Rand |
| 8 | Rand |
| 9 | Anwendercomputer |
| 10 | Anwender-Softwareprogramm |
| 11 | Druckserver |
| 12 | Netzwerk |
| 13 | Druckgerät |
| 14 | Druckstation |
| 15 | Druckstation |
| 16 | Druckstation |
| 17 | Druckdatencontroller |
| 18 | Medium Presentation Space |
| 19 | Medium Overlay Presentation Space |
| 20 | Page Presentation Space |
| 21 | Page Overlay Presentation Space |
| 22 | Object Area Presentation Space |
| 23 | Data Object Presentation Space |
| 24 | Presentation Space |
| 25 | Presentation Space |
| 26 | kreisförmiges Element |

**Patentansprüche**

1. Verfahren zum Trapping von Druckdaten mit einer Vielzahl von nicht gerasterten Objekten, wobei die Objekte einzeln in eine Bildpunkt-Datei überführt werden und hierzu jeweils folgende Schritte ausgeführt werden:

   - Ermitteln von mindestens einer Überfüllung für das jeweilige Objekt bezüglich der an das Objekt angrenzenden Farbbereiche in der Bildpunkt-Datei gemäß vorbestimmten Trapping-Regeln, und
   - Einfügen des Objektes und der mindestens einen Überfüllung in die Bildpunkt-Datei, wobei beim Einfügen das Objekt und die Überfüllung in die Bildpunkt-Datei gerastert werden.

2. Verfahren nach Anspruch 1,
   **dadurch gekennzeichnet, dass**
   während des Überführens der einzelnen Objekte in die Bildpunkt-Datei die Druckdaten mit vorgehalten werden.

**3.** Verfahren nach Anspruch 1 oder 2,
**dadurch gekennzeichnet, dass**
beim Einfügen des Objektes in die Bildpunkt-Datei der Bereich, in dem das Objekt einzufügen ist, aus der Bildpunkt-Datei ausgestanzt wird, bevor das Objekt in die Bildpunkt-Datei gerastert wird, wobei der auszustanzende Bereich entsprechend der vorher ermittelten Überfüllung vermindert werden kann.

**4.** Verfahren nach Anspruch 3,
**dadurch gekennzeichnet, dass**
bei einem Mehrfarbendruck die Bereiche für die einzuführenden Objekte durch alle Farbauszüge hindurch ausgestanzt werden.

**5.** Verfahren nach einem der Ansprüche 1 bis 4,
**dadurch gekennzeichnet, dass**
beim Mehrfarbendruck die Überfüllungen für die einzelnen Farbauszüge separat ermittelt und eingefügt werden.

**6.** Verfahren nach einem der Ansprüche 1 bis 5,
**dadurch gekennzeichnet,**
**dass** Überfüllungen nur an Rändern jeweils eines der Objekte ermittelt werden, wenn sich die Helligkeit des jeweiligen Objektes zum angrenzenden Bereich um einen Differenzbetrag unterscheidet, der größer als ein vorbestimmter Schwellenwert ist.

**7.** Verfahren nach einem der Ansprüche 1 bis 6,
**dadurch gekennzeichnet, dass**
bei Überfüllungen im Bereich einer schmalen, langen Spitze, die Spitze nicht über die Breite der Überfüllung in X-Richtung oder in Y-Richtung bezüglich des äußersten Punktes des nicht getrappten Objektes hinaus erstreckt.

**8.** Verfahren nach einem der Ansprüche 1 bis 7,
**dadurch gekennzeichnet, dass**
das Verfahren in einem Druckdatencontroller (17) eines Druckgerätes (13) durchgeführt wird.

**9.** Verfahren nach einem der Ansprüche 1 bis 8,
**dadurch gekennzeichnet, dass**
die Druckdaten in einem Druckdatenstrom übertragen werden und der Druckdatenstrom Resourcendaten referenziert, die Trapping-Parameter und/oder Trapping-Anweisungen enthalten.

**10.** Verfahren nach einem der Ansprüche 1 bis 9,
**dadurch gekennzeichnet,**
**dass** die Druckdaten in einem Druckdatenstrom zusammen mit Trapping-Anweisungen an ein Druckgerät übertragen werden, und der Druckdatenstrom in unterschiedlichen Ebenen strukturiert ist, wobei je höher die Ebene ist, desto größer ist der Bereich auf den die in der jeweiligen Ebene enthaltenen Anweisungen wirken und Trapping-Anweisungen aus unteren Ebenen haben Vorrang gegenüber Trapping-Anweisungen aus höheren Ebenen.

**11.** Verfahren nach Anspruch 10,
**dadurch gekennzeichnet,**
**dass** in der höchsten Ebene eine Trapping-Anweisung vorgesehen ist, mit welcher das Trapping im gesamten Bereich der höchsten Ebene ein oder ausgeschaltet werden kann.

**12.** Verfahren nach einem der Ansprüche 10 oder 11,
**dadurch gekennzeichnet, dass**
der Druckdatenstrom ein AFP-/IPDS-Datenstrom ist.

**13.** Verfahren nach Anspruch 12,
**dadurch gekennzeichnet,**
**dass** in den im AFP-/IPDS-Druckdatenstrom enthaltenen Presentation Spaces die Trapping-Anweisungen enthalten sind, die das Trapping innerhalb des jeweiligen Presentation Spaces regeln, wobei die Presentation Spaces in unterschiedlichen Ebenen angeordnet sind.

**14.** Drucksystem zum Trapping von Druckdaten,

umfassend einen Druckdatencontroller (17) und mehrere Druckwerke (14, 15, 16), wobei der Druckdatencontroller (17) zum Ausführen des Trapping-Verfahrens nach einem der Ansprüche 1 bis 13 ausgebildet ist.

15. Computerprogramm für ein Drucksystem nach Anspruch 36, das zum Ausführen des Verfahrens nach einem der Ansprüche 1 bis 13 ausgebildet ist.

**Claims**

1. A method for trapping of image data with a plurality of not rastered objects, wherein the objects are individually transferred into a pixel file, and for this the following steps are executed:

   - determining at least one overfill for the respective object relative to the colour regions bordering the object in the pixel file, according to predetermined trapping rules, and
   - inserting the object and the at least one overfill in the pixel file, wherein upon insertion the object and the overfill being rastered in the pixel file.

2. Method according to claim 1, **characterized in that** during the transfer of the individual objects in the pixel file the print data are stored as well.

3. Method according to claim 1 or 2, **characterized in that** when inserting the object in the pixel file the region into which the object is to be inserted is punched out of the pixel file before the object is rastered into the pixel file, wherein the punched out region can be reduced according to the previously determined overfill.

4. Method according to claim 3, **characterized in that** the regions for the objects to be inserted are punched out through all colour separations given multicolour printing.

5. Method according to one of claims 1 to 4, **characterized in that** the overfills for the individual colour separations are determined and inserted separately given multicolour printing.

6. Method according to one of claims 1 to 5, **characterized in that** overfills are only determined at edges of one of the objects, if the brightness of the respective object relative to the adjoining region differs by a difference that is greater than a predetermined threshold value.

7. Method according to one of claims 1 to 6, **characterized in that** in case of overfills in the region of a long, narrow top, the top does not extend over the width of the overfill in the x-direction or in the y-direction relative to the most extreme point of the not-trapped object.

8. Method according to one of claims 1 to 7, **characterized in that** the method is performed in a print data controller (17) of a printing device (13).

9. Method according to one of claims 1 to 8, **characterized in that** the print data are transferred in a print data stream and **in that** the print data stream references resource data containing trapping parameters and/or trapping instructions.

10. Method according to one of claims 1 to 9, **characterized in that** the print data are transferred in a print data stream together with trapping instructions to a printing device, and **in that** the print data stream is structured in different levels, wherein the higher the level, the greater is the region on which the instructions contained in the respective level have an effect and trapping instructions from lower levels have priority over trapping instructions from higher levels.

11. Method according to claim 10, **characterized in that** in the highest level a trapping instruction is provided with which the trapping in the whole region of the highest level can be switched on or switched off.

12. Method according to claims 10 or 11, **characterized in that** the print data stream is an AFP-/IPDS data stream.

13. Method according to claim 12, **characterized in that** in the presentation spaces contained in the AFP-/-IPDS print data stream the trapping instructions are contained that regulate the trapping within the respective presentation spaces, wherein the presentation spaces being arranged in different levels.

14. Printing system for trapping of print data, comprising a print data controller (17) and several printing units (14, 15, 16), wherein the print data controller (17) being designed for performing the trapping method according to one of claims 1 to 13.

15. Computer programme for a printing system according to claim 14 being designed for performing the method according to one of claims 1 to 13.

**Revendications**

1. Procédé destiné à intercepter des données d'impression comprenant une pluralité d'objets non tramés, les objets étant transférés individuellement dans un fichier de points d'image et respectivement les étapes suivantes étant mises en oeuvre à cet effet, consistant à :

   - déterminer au moins un surdosage pour l'objet respectif par rapport aux zones de couleur adjacentes à l'objet dans le fichier de points d'image conformément à des règles d'interception prédéfinies, et
   - insérer l'objet et le ou les surdosages dans le fichier de points d'image, l'objet et le surdosage étant tramés dans le fichier de points d'image lors de l'insertion.

2. procédé selon la revendication 1,
   **caractérisé en ce que** les données d'impression sont mises à disposition pendant le transfert des objets individuels dans le fichier de points d'image.

3. Procédé selon la revendication 1 ou 2,
   **caractérisé en ce que** lors de l'insertion de l'objet dans le fichier de points d'image, la zone dans laquelle l'objet doit être inséré est découpée du fichier de points d'image avant que l'objet ne soit tramé dans le fichier de points d'image, la zone à découper pouvant être réduite en fonction du surdosage préalablement déterminé.

4. Procédé selon la revendication 3,
   **caractérisé en ce que** dans le cas d'une impression multicolore, les zones pour les objets à introduire sont découpées à travers toutes les sélections de couleur.

5. Procédé selon l'une quelconque des revendications 1 à 4,
   **caractérisé en ce que** lors d'une impression multicolore, les surdosages pour les sélections de couleur individuelles sont déterminés et insérés séparément.

6. Procédé selon l'une quelconque des revendications 1 à 5,
   **caractérisé en ce que** les surdosages ne sont déterminés qu'aux bords respectivement d'un des objets lorsque la luminosité de l'objet respectif par rapport à la zone adjacente se différencie d'une valeur différentielle supérieure à une valeur seuil prédéfinie.

7. Procédé selon l'une quelconque des revendications 1 à 6,
   **caractérisé en ce que** dans le cas de surdosages dans la zone d'une pointe étroite et longue, la pointe ne s'étend pas au-delà de la largeur du surdosage dans la direction X ou dans la direction Y par rapport au point le plus extérieur de l'objet non intercepté.

8. Procédé selon l'une quelconque des revendications 1 à 7,
   **caractérisé en ce que** le procédé est mis en oeuvre dans un dispositif de commande de données d'impression (17) d'un appareil d'impression (13).

9. Procédé selon l'une quelconque des revendications 1 à 8,
   **caractérisé en ce que** les données d'impression sont transférées dans un flux de données d'impression et le flux de données d'impression référence des données de ressource contenant des paramètres d'interception et/ou des instructions d'interception.

10. Procédé selon l'une quelconque des revendications 1 à 9,

**caractérisé en ce que** les données d'impression sont transférées dans un flux de données d'impression conjointement avec des instructions d'interception sur un appareil d'impression, et le flux de données d'impression est structuré dans différents plans, plus le plan étant élevé, plus la zone sur laquelle les instructions contenues dans le plan respectif agissent étant importante et les instructions d'interception venant de plans inférieurs étant prioritaires sur les instructions d'interception provenant de plans supérieurs.

11. Procédé selon la revendication 10,
**caractérisé en ce qu'**une instruction d'interception permettant d'activer ou de désactiver l'interception dans toute la zone du plan le plus élevé est prévue dans le plan le plus élevé.

12. Procédé selon l'une quelconque des revendications 10 ou 11,
**caractérisé en ce que** le flux de données d'impression est un flux de données AFP/IPDS.

13. Procédé selon la revendication 12,
**caractérisé en ce que** les instructions d'interception réglant l'interception à l'intérieur de l'espace de présentation respectif sont contenues dans les espaces de présentation contenus dans le flux de données d'impression AFP/IPDS, les espaces de présentation étant disposés dans différents plans.

14. Système d'impression destiné à intercepter des données d'impression, comprenant un dispositif de commande de données d'impression (17) et plusieurs groupes d'impression (17), le dispositif de commande de données d'impression (17) étant destiné à mettre en oeuvre le procédé d'interception selon l'une quelconque des revendications 1 à 13.

15. Programme informatique pour un système d'impression selon la revendication 14, destiné à mettre en oeuvre le procédé selon l'une quelconque des revendications 1 à 13.

FIG. 1a

FIG. 1b

FIG. 1c

FIG. 2a

FIG. 2b

FIG. 2c

FIG. 3

Start — S1

Extrahieren eines Objektes
aus den Druckdaten — S2

Berechnen der Trapbereiche des
Objekts bzgl. einer Bitmap-Datei — S3

Einfügen des Objektes in
die Bitmap-Datei — S4

S5

ja — Weiteres
Objekt vorhanden
?

nein

Ende — S6

FIG. 4

Start — S7

Ausschneiden des Objektes
in Bitmap-Datei (optional) — S8

Rastern des Objektes in
Bitmap-Datei — S9

Ende — S10

FIG. 5

**Tabelle 1**

| X-Richtung | Bereich: 0.02 – 5.0 mm<br>0.057 – 14.2 Punkt | Vorgabe:<br>0.1 mm |
|---|---|---|
| Y-Richtung | Gleicher Bereich wie in X-Richtung | Vorgabe:<br>X-Wert |

**Tabelle 2**

| X-Richtung | Bereich: 0.02 – 5.0 mm<br>0.057 – 14.2 Punkt | Vorgabe:<br>0.2 mm |
|---|---|---|
| Y-Richtung | gleicher Bereich | X-Wert |

**Tabelle 3**

| Trap-Schritt-Grenze | Bereich: 0% - 100%<br>Durch Ansteigen des Wertes wird die Anzahl der Trappings sinken. Ein Minimalschritt von 5 % wird empfohlen. | Vorgabe:<br>25% |
|---|---|---|
| CMYK | Die Farbstoffe des CMYK werden auf Basis des relativen Prozentsatzes verglichen. Die Schrittgrenze kann für jeden Coloranten verschieden sein. | |
| Schmuckfarbe | Der ND der Schmuckfarbe wird mit dem ND der Medium Color verglichen. (Weißes Papier wird als gegeben angenommen.)<br>Die Schmuckfarbe wird in einer anderen Ebene als die CMYK Ebene aufgebaut und deshalb kann der Prozentsatz der Überdeckungen nicht verglichen werden. | |
| Indexed color (indizierte Farbe) | Die Punkt-Coloranten des Indexed Color Space (indizierter Farbraum) werden auf Basis des relativen Prozentsatzes verglichen.<br>Die Schrittgrenze kann für jeden Farbstoff verschieden sein. | |

# FIG. 6/Seite 1

Tabelle 4

| Schwarz-(Dichte)-Grenze | Bereich: 0% bis 100 % der neutralen Dichte von Schwarz | Vorgabe: 100% |
|---|---|---|
| | 0% - alle Farben werden wie Schwarz behandelt.<br>100% - nur Schwarz wird wie Schwarz behandelt. | |
| | Schmuckfarben können wie Schwarz behandelt werden indem die Schwarz-Dichte-Grenze weniger oder gleich der neutralen Dichte der Schmuckfarbe gesetzt wird. | Punkt |

Tabelle 5

| Schwarz-Farben-Grenze | Bereich: 0.0 – 1.0<br><br>0.0 (kein Colorant) bis 1.0 (volle Konzentration) | Vorgabe: 1.0 |
|---|---|---|

Tabelle 6

| Schwarz-Überdruck | | Vorgabe: |
|---|---|---|
| Text | Bereich: 0 – 999 Punkte | 12 Punkte |
| Linien | Bereich: 0.02 – 5.0 mm<br>0.057 – 14.2 Punkte | Schwarz-Trap-Breite |

Tabelle 7

| Zentrum-Trap-Grenze | Bereich: 0.0 – 1.0<br><br>0.0 (kein Zentrum-Trap) bis 1.0 (alles Zentrum-Trap) | Vorgabe: 1.0 |
|---|---|---|

# FIG. 6/Seite 2

Tabelle 8

| Normal | Die Ausdehnung des Bereichs ist in X- und Y-Richtung. An der Kante erfolgt die Ausdehnung entsprechend der Trap-Breite. | Ausdehnung | |
| | z.B. Farbe 1 (heller) = z.B. gelb Farbe 2 (dunkler) = z.B. blau | Choke | Clipped Choke |
| Fase | | | |
| Rund | | | |
| Gehrung Vorgabe | | | Gehrungs-Ausdehnugs-Trap |

FIG. 6/Seite 3

FIG. 7a

FIG. 7b

FIG. 8a

FIG. 8b

FIG. 9

Stand der Technik

FIG. 10

FIG. 11

FIG. 12

| Offset | Name | Bereich | Bedeutung | O/M | Ausnahme |
|--------|------|---------|-----------|-----|----------|
| 0 | Länge | X'03 – FF' | Länge des Triplets, inclusive diesem Feld | M | |
| 1 | TID | X'??' | | M | |
| 2 | Trapping aktiviert | X'01' | • Trapping aktiviert | M | |
| | | X'81' | • Trapping deaktiviert | | |
| 3 | Basiseinheit | X'00' | • 10" | | |
| | | X'01' | • 10 cm | | |
| 4 – 5 | UPUB | X'0001 – 7FFF' | • L-Einheiten pro Basiseinheit Vermerk: X '02D0'=1Punkt. | | |
| | | FFFF | • Benutze die L-Einheiten Definition welche für den IPDS von welchem das Triplet ein Teil ist benutzt wird. | | |
| 6 – Ende | Mögliche Trapping-Parameter-Markierungen, siehe unten: | | | | |

## 2. Trap-Breite für nicht schwarze Farben (optional)

| Offset | Name | Bereich | Bedeutung | O/M | Ausnahme |
|--------|------|---------|-----------|-----|----------|
| 0 | Länge | X'06' | Länge der Markierung, inclusive diesem Feld | M | |
| 1 | TID | X'03' | | M | |
| 2 – 3 | X-Richtung | | Trap-Breite – X-Richtung | M | |
| 4 – 5 | Y-Richtung | | Trap-Breite – Y-Richtung | M | |

Byte 2 – 3: Trap-Breite in der X-Richtung: Die Breite wird in L-Einheiten angegeben. Der Wert muss einen Wert im Bereich von 0.057 bis 14.2 Punkten (1/72") darstellen.

Byte 4 – 5: Trap-Breite in der Y-Richtung: Der gleiche Bereich wie für die X-Richtung.

Bei einem Wert X'FFFF' wird der Wert von dem nächsten darunter liegenden Bereich als Vorgabe benutzt.

## 3. Trap-Breite für schwarze Farben / Opake Coloranten (optional)

| Offset | Name | Bereich | Bedeutung | O/M | Ausnahme |
|--------|------|---------|-----------|-----|----------|
| 0 | Länge | X'06' | Länge der Markierung, inclusive diesem Feld | M | |
| 1 | TID | X'04' | | M | |
| 2 – 3 | X-Richtung | | Trap-Breite – X-Richtung | M | |
| 4 – 5 | Y-Richtung | | Trap-Breite – Y-Richtung | M | |

Byte 2 – 3: Trap-Breite in der X-Richtung: Die Breite wird in L-Einheiten angegeben. Der Wert muss einen Wert im Bereich von 0.057 bis 14.2 Punkten (1/72") darstellen.

Byte 4 – 5: Trap-Breite in der Y-Richtung. Der gleiche Bereich wie für die X-Richtung

Bei einem Wert X'FFFF' wird der Wert von dem nächsten darunter liegenden Bereich als Vorgabe benutzt.

# FIG. 13/Seite 1

### 4. Trap-Schritt-Grenze (optional)

| Offset | Name | Bereich | Bedeutung | O/M | Ausnahme |
|--------|------|---------|-----------|-----|----------|
| 0 | Länge | X'03' | Länge der Markierung, inclusive diesem Feld | M | |
| 1 | TID | X'05' | | M | |
| 3 | TS-Grenze | X'00 – 64' | Trap-Schritt-Grenze in % | M | |

Byte 3: Trap-Schritt-Grenze: Der Wert wird in Prozent angegeben.

Bei einem Wert X'FF' wird der Wert von dem darunterliegenden Bereich als Vorgabe benutzt.

### 5. Schwarz-Dichte-Grenze (optional)

| Offset | Name | Bereich | Bedeutung | O/M | Ausnahme |
|--------|------|---------|-----------|-----|----------|
| 0 | Länge | X'03' | Länge der Markierung, inclusive diesem Feld | M | |
| 1 | TID | X'06' | | M | |
| 3 | BD-Grenze | X'00 – 64' | Schwarz-Dichte-Grenze in % | M | |

Byte 3: Schwarz-Dichte-Grenze: Der Wert wird in Prozent angegeben.

Bei einem Wert X'FF' wird der Wert von dem darunterliegenden Bereich als Vorgabe benutzt.

### 6. Schwarz-Farb-Grenze (optional)

| Offset | Name | Bereich | Bedeutung | O/M | Ausnahme |
|--------|------|---------|-----------|-----|----------|
| 0 | Länge | X'03' | Länge der Markierung, inclusive diesem Feld | M | |
| 1 | TID | X'07' | | M | |
| 3 | BC-Grenze | X'00 – 64' | Schwarz-Farb-Grenze in % | M | |

Byte 3: Schwarz-Farb-Grenze: Der Wert wird in Prozent angegeben.

Bei einem Wert X'FF' wird der Wert von dem darunterliegenden Bereich als Vorgabe benutzt.

### 7. Schwarz-Überdruck (optional)

| Offset | Name | Bereich | Bedeutung | O/M | Ausnahme |
|--------|------|---------|-----------|-----|----------|
| 0 | Länge | X'03' | Länge der Markierung, inclusive diesem Feld | M | |
| 1 | TID | X'08' | | M | |
| 3 - 4 | BO Text Grenze | X'0000 – AFFF' | Text kleiner als<br>Vermerk: normaler Wert X'21C0' = 12 Punkte, wenn der L-Wert pro Basiseinheit X'02D0' ist. | M | |
| 5 - 6 | BO Liniengrenze | | Linien kleiner als<br>Vermerk: Normal identisch zur Schwarz-Überfüll-Breite | M | |

Byte 3: Schwarz-Überdruck: Der Wert hängt von der Größe eines Buchstabens oder einer Linie ab.

Bei einem Wert X'FF' wird der Wert von dem darunterliegenden Bereich als Vorgabe benutzt.

# FIG. 13/Seite 2

## 8. Zentrum-Trap-Grenze (optional)

| Offset | Name | Bereich | Bedeutung | O/M | Ausnahme |
|---|---|---|---|---|---|
| 0 | Länge | X'03' | Länge der Markierung, inclusive diesem Feld | M | |
| 1 | TID | X'09' | | M | |
| 3 | CT-Grenze | X'00 – 64' | Zentrum-Trap-Grenze in % | M | |

Byte 3: Zentrum-Trap-Grenze: Der Wert wird in % angegeben.

Bei einem Wert X'FF' wird der Wert des darunterliegenden Bereichs als Vorgabe benutzt.

## 9. Trap-Kanten-Form (optional)

| Offset | Name | Bereich | Bedeutung | O/M | Ausnahme |
|---|---|---|---|---|---|
| 0 | Länge | X'04 or 08' | Länge der Markierung, inclusive diesem Feld | M | |
| 1 | TID | X'0A' | | M | |
| 3 | Trap-Kante | | Trap-Kanten-Form | M | |
| | | X'01' | • Fase | | |
| | | X'02' | • Rund | | |
| | | X'03' | • Gehrung | | |
| | | X'04' | • Normal | | |
| | | X'05' | • Diamant | | |
| | | X'06' | • Elliptisch | | |
| 4 | Reserviert | X'00' | Reserviert, sollte null sein | M | |
| 5 – 7 | Gehrungs-grenze | | Gehrungsgrenze | O | |

Byte 3: Trap-Kanten-Form

Byte 5 – 7: Gehrungsgrenze: Der Parameter ist nur vorhanden wenn die Trap-Kanten-Form vom Typ X'03' ist.

Bei einem Wert X'FF' wird der Wert des darunterliegenden Bereichs als Vorgabe benutzt.

## 10. Trap-Form (optional)

| Offset | Name | Bereich | Bedeutung | O/M | Ausnahme |
|---|---|---|---|---|---|
| 0 | Länge | X'03' | Länge der Markierung, inclusive diesem Feld | M | |
| 1 | TID | X'0B' | | M | |
| 3 | Trap-Form | | Trap-Form | M | |
| | | X'01' | • Ausdehnung | | |
| | | X'02' | • Choke | | |
| | | X'03' | • Zentrum | | |
| | | X'04' | • Gleiten | | |
| | | X'FF' | • Vorgabe | | |

Byte 3: Bei einem Wert X'FF' wird der Wert des darunterliegenden Bereichs als Vorgabe benutzt.

# FIG. 13/Seite 3

## 11. Gleit-Trap-Grenze (optional)

| Offset | Name | Bereich | Bedeutung | O/M | Exception |
|---|---|---|---|---|---|
| 0 | Länge | X'03' | Länge der Markierung, inclusive diesem Feld | M | |
| 1 | TID | X'0C' | | M | |
| 3 | Gleit-Grenze | X'00 – 64' | Gleit-Trap-Grenze , in % | M | |

Byte 3: Gleit- Trap-Grenze: Bei einem Wert X'FF' wird der Wert des darunterliegenden Bereichs als Vorgabe benutzt.

# FIG. 13/Seite 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006055587
- DE 102006055624
- DE 102006055625
- DE 102006055626
- WO 9839691 A1
- EP 200400700 W
- WO 2005001765 A2
- US 5581667 A
- EP 484890 A2
- US 20030090689 A1
- US 20060033959 A1
- US 4931861 A
- EP 929189 A2
- DE 19912511 A1
- US 20010055130 A
- EP 833216 A2
- WO 2006069980 A1
- US 2003017934 A1
- US 5666543 A
- US 20050012946 A1
- US 6097498 A
- WO 03069548 A
- US 5768488 A
- US 5982997 A
- US 20050024668 A1
- WO 20040008379 A1

**In der Beschreibung aufgeführte Nicht-Patentliteratur**

- The World of Printers, Technologies of Océ Printing Systems. Océ Printing Systems GmbH, 2002, 249-286
- THE WORLD OF PRINTERS, TECHNOLOGIES OF OCE PRINTING SYSTEMS. 287-325
- THE WORLD OF PRINTERS, TECHNOLOGIES OF OCE PRINTING SYSTEMS. 233-248
- THE WORLD OF PRINTERS, TECHNOLOGIES OF OCE PRINTING SYSTEMS. 209-232
- THE WORLD OF PRINTERS, TECHNOLOGIES OF OCE PRINTING SYSTEMS. 246-248
- The World of Printers. Océ Printing Systems GmbH. November 2002, 313-361
- *Publikation Nr. SC31-6802-05,* 93-95
- Image Object Architecture Reference. IBM-Publikation SC31-6805-05. August 2002
- Mixed Object Document Content Architecture Reference. IBM-Publikation SC31-6802-06. Januar 2004
- Intelligent Printer Data Stream Reference. IBM-Dokument Nr. S544-3417-06. November 2002
- *Print Services Facility for OS/390 & z/OS, Introduction,* Marz 2002
- Reproducing Color Images Using Custom Inks. **STOLLNITZ, J.** ACM Proceedings of the 25th annual conference on Computer graphics and interactive techniques, SIGGRAPH '98. ACM Press, Juli 1998
- Intelligent Printer Data Stream, Reference. IBM-Publikation. November 2002